(19) Europäisches Patentamt
European Patent Office
Office européen des brevets

(11) EP 3 926 408 B1

(12) EUROPEAN PATENT SPECIFICATION

(45) Date of publication and mention of the grant of the patent:
**24.09.2025 Bulletin 2025/39**

(21) Application number: **21176808.0**

(22) Date of filing: **31.05.2021**

(51) International Patent Classification (IPC):
***G03G 15/00*** *(2006.01)* ***G03G 8/00*** *(2006.01)*
***G03G 9/087*** *(2006.01)*

(52) Cooperative Patent Classification (CPC):
**G03G 8/00; G03G 9/08782; G03G 15/6573; G03G 15/6585;** G03G 2215/00801

# (54) IMAGE FORMING METHOD AND IMAGE FORMING SYSTEM

BILDERZEUGUNGSVERFAHREN UND BILDERZEUGUNGSSYSTEM

PROCÉDÉ DE FORMATION D'IMAGES ET SYSTÈME DE FORMATION D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.06.2020 JP 2020105161**

(43) Date of publication of application:
**22.12.2021 Bulletin 2021/51**

(73) Proprietor: **KONICA MINOLTA, INC.**
**Tokyo 100-7015 (JP)**

(72) Inventors:
- **YOSHIE, Naoki**
  **Tokyo, 100-7015 (JP)**
- **SUHARA, Yuka**
  **Tokyo, 100-7015 (JP)**

(74) Representative: **Gille Hrabal Partnerschaftsgesellschaft mbB**
**Patentanwälte**
**Brucknerstraße 20**
**40593 Düsseldorf (DE)**

(56) References cited:
**EP-A1- 0 823 670**
**EP-A1- 2 682 816**
**JP-A- 2012 242 726**
**US-A1- 2011 223 527**
**US-A1- 2013 188 972**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGOUND

### Technological Field

The present invention relates to an image forming method and an image forming system. More particularly, the present invention relates to an image forming method and an image forming system which further improve coatability and adhesion to an image of an active ray-curable liquid substance as a varnish to be applied to an image as a post-pressing process.

### Description of the Related Art

In recent years, in the production printing (PP) market, since printing plates are not required, an electrophotographic image forming method capable of producing prints of a necessary number of sheets on demand has been used. On the other hand, in the PP market, in order to improve image quality and durability, a varnish coating film (hereinafter also referred to as "varnish layer") is sometimes formed on an image, and there is an increasing demand to apply a varnish to a toner image formed by an electrophotographic image forming method or an image on which the toner image is thermally fixed (hereinafter also referred to as "fixed image" collectively).

However, the fixed image obtained through the electrophotographic image forming method has a problem in that the varnish coating property is lower and varnish repelling may occur, and the adhesiveness between the fixed image and the varnish layer is inferior even if the varnish coating is possible.

In order to cope with such a problem, there has been proposed an image forming method in which the coatability of a varnish to an image is enhanced by using a toner having high adhesiveness to the varnish (for example, Patent Document 1: JP-A 2015-4971). In addition, there has been proposed an image forming method for enhancing the coatability of a varnish to an image by providing a primer layer on a toner image before applying the varnish to the toner image (for example, Patent Document 2: JP-A 2013-246281).

However, both documents do not focus on changes in varnish coatability by appropriately controlling the surface energies of the varnish and the image, and there is room for improvement in that respect.

## SUMMARY

The present invention has been made in view of the above-mentioned problems and status. An object of the present invention is to provide an image forming method and an image forming system in which the coatability and the adhesiveness to an image of an active ray-curable liquid substance as a varnish to be applied to an image as a post-press process are further improved.

In order to solve the above-mentioned problems, the present inventor has found the following in the process of examining the causes of the above-mentioned problems. In other words, it has been found that the above problem may be solved by applying an active ray-curable liquid substance (varnish) of a specific viscosity having a specific contact angle to an image formed of a printing material containing a release agent, and thus the present invention has been achieved. That is, the above problem according to the present invention is solved by the following means.

To achieve at least one of the above-mentioned objects of the present invention, an image forming method is provided comprising a step of forming an image on a recording medium with a printing material containing a release agent, followed by a step of applying an active ray-curable liquid substance by a roll coating method, wherein the active ray-curable liquid substance contains a reactive monomer and an acrylic resin polymer; and when a contact angle A (°) with an image is taken on a horizontal axis and a viscosity V (mPa·s) is taken on a vertical axis in a coordinate system for the active ray-curable liquid substance at a temperature of 25 °C, and when a coordinate (A, V) of a point indicating the contact angle A (°) and the viscosity V (mPa·s) corresponding to the contact angle A (°) is plotted in the coordinate system, the contact angle A (°) and the viscosity V (mPa·s) of the active ray-curable liquid substance are included in a coordinate region R (A, V) on an upper side of a contact angle-viscosity curve represented by a formula on a right side of the following Expression (1),

$$\text{Expression (1):}\quad R(A, V) > 0.55 \times A^2 - 22 \times A + 250$$

in Expression (1), the coordinate region R (A, V) is a region composed of an aggregate of the coordinates (A, V) of points on the upper side of the contact angle-viscosity curve represented by the formula on the right side of the Expression (1) in the coordinate system.

By the above means of the present invention, it is possible to provide an image forming method which further

improve coatability and adhesion to an image of an active ray-curable liquid substance as a varnish to be applied to an image as a post-press processing.

The expression mechanism or action mechanism of the effect of the present invention is not clarified, but is inferred as follows.

In general, it is considered that the coatability (wettability) of the varnish to the image (solid surface) is higher as the surface tension of the varnish is lower than the surface tension of the image. When the printing material has a low surface energy component such as wax as a release agent, the component bleeds to the image surface to reduce the surface energy. When a varnish containing an active ray-curable liquid substance is simply applied to an image as a post-pressing process (processing after printing, that is, processing after image formation) to such an image, coatability and adhesiveness deteriorate. Therefore, as a result of extensive studies, the wettability of the active ray-curable liquid substance was made different depending on the image. It has been found that the post-processing property and the coatability of the active ray-curable liquid substance were improved by appropriately adjusting the surface tension, that is, the surface energy of the active ray-curable liquid substance and the image.

In order to increase the coatability (wettability) of the active ray-curable liquid substance, it is effective to reduce the surface tension of the active ray-curable liquid substance, that is, to reduce the contact angle with the image. However, it was found that the coatability (wettability) was not uniquely determined only by the surface tension of the active ray-curable liquid substance, and the viscosity of the active ray-curable liquid substance was also an important element.

That is, for example, as shown in FIG. 1, when a coordinate (A, V) of a point indicating the contact angle A (°) and the viscosity V (mPa·s) corresponding to the contact angle A(°) is plotted in a coordinate system in which the contact angle A (°) with an image is taken on the horizontal axis and the viscosity V (mPa·s) is taken on the vertical axis for the active ray-curable liquid substance at the temperature of 25 °C, it has been found that the coatability is good when the contact angle A (°) and the viscosity V (mPa·s) of the active ray-curable liquid substance are included in a coordinate region R (A, V) on an upper side of a specific contact angle-viscosity curve. Therefore, it is presumed that the problem of the present invention may be solved based on the above findings and considerations.

## BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention.

FIG. 1 is a conceptual diagram of a contact angle-viscosity curve obtained when a coordinate (A, V) of a point indicating a contact angle A (°) and a viscosity V (mPa·s) corresponding to the contact angle A (°) is plotted in a coordinate system.

FIG. 2 is a conceptual diagram showing the significance of surface treatment of an image according to the present invention.

FIG. 3 is a conceptual diagram showing a step of modifying a surface according to the present invention.

FIG. 4 is a conceptual diagram showing the image forming method according to the present invention.

FIG. 5 is a conceptual diagram representing the contact angle between the active ray-curable liquid substance according to the present invention and the image. FIG. 6 is a conceptual diagram of an image forming method including a step of modifying a surface according to the present invention.

FIG. 7 is an example of an image forming apparatus equipped with a tandem-type color image forming unit according to the present invention.

FIG. 8 is a contact angle-viscosity curve and a plot diagram of Examples and Comparative Examples.

## DETAILED DESCRIPTION OF THE EMBODIMENTS

Hereinafter, one or more embodiments of the present invention will be described. However, the scope of the invention is not limited to the disclosed embodiments.

The image forming method of the present invention is an image forming method comprising a step of forming an image on a recording medium with a printing material containing a release agent, followed by a step of applying an active ray-curable liquid substance by a roll coating method, wherein the active ray-curable liquid substance contains a reactive monomer and an acrylic resin polymer; and when a contact angle A (°) with an image is taken on a horizontal axis and a viscosity V (mPa·s) is taken on a vertical axis in a coordinate system for the active ray-curable liquid substance at a temperature of 25 °C, and when a coordinate (A, V) of a point indicating the contact angle A (°) and the viscosity V (mPa·s) corresponding to the contact angle A (°) is plotted in the coordinate system, the contact angle A(°) and the viscosity V (mPa·s) of the active ray-curable liquid substance are included in a coordinate region R (A, V) on an upper side of a contact angle-viscosity curve represented by a formula on a right side of the above-mentioned Expression (1). This feature is a

technical feature common to or corresponding to each of the following embodiments.

As an embodiment of the present invention, for the active ray-curable liquid substance, when the contact angle with an image is A (°) and the viscosity is V (mPa·s), it is more preferable that A (°) and V (mPa·s) satisfy the above Expressions (2) to (4) from the viewpoint of expressing the effect.

It is preferable that the printing material is a toner for developing an electrostatic charge image because the effect of the present invention is remarkable.

It is preferable that the toner for developing an electrostatic charge image contains a hydrocarbon, a polyethylene, a coal or a Fischer-Tropsch wax as a release agent from the viewpoint of wettability with an active ray-curable liquid substance.

It is preferable that the toner for developing an electrostatic charge image contains a resin, a colorant and a release agent, and that the resin is formed of a styrene-acrylic resin and an aromatic polyester resin from the viewpoint of low-temperature fixability, coatability of an active ray-curable liquid substance, and an image.

It is more preferable that the contact angle A (°) and the viscosity V (mPa·s) of the active ray-curable liquid substance are included in a coordinate region R (A, V) on an upper side of a contact angle-viscosity curve represented by a formula on a right side of the Expression (5) from the viewpoint of expressing the effect.

Further, it is preferable to have a step of modifying the surface after the step of forming the image and prior to the step of applying the active ray-curable liquid substance from the viewpoint of coatability of the active ray-curable liquid substance and adhesion to the image.

It is more preferable from the viewpoint of expressing the effect that the step of modifying the surface is a step of applying an aqueous solution containing a petroleum-based nonionic surfactant to the image, and that the HLB value of the nonionic surfactant is within a range of 8 to 13.

It is further preferred from the viewpoint of expressing the effect that the HLB value of the nonionic surfactant is within a range of 9 to 13.

It is preferable that the active ray-curable liquid substance is an ultraviolet-curable resin liquid (varnish) from the viewpoint of expressing the effect.

The image forming method of the present invention is suitably used in an image forming system.

Hereinafter, the present invention and the constitution elements thereof, as well as configurations and embodiments to carry out the present invention will be detailed in the following. In the present description, when two figures are used to indicate a range of value before and after "to", these figures are included in the range as a lowest limit value and an upper limit value.

[Outline of Image forming method of the present invention]

The image forming method of the present invention is an image forming method comprising a step of forming an image on a recording medium with a printing material containing a release agent, followed by a step of applying an active ray-curable liquid substance by a roll coating method, wherein the active ray-curable liquid substance contains a reactive monomer and an acrylic resin polymer; and when a contact angle A (°) with an image is taken on a horizontal axis and a viscosity V (mPa·s) is taken on a vertical axis in a coordinate system for the active ray-curable liquid substance at a temperature of 25 °C, and when a coordinate (A, V) of a point indicating the contact angle A (°) and the viscosity V (mPa·s) corresponding to the contact angle A (°) is plotted in the coordinate system, the contact angle A (°) and the viscosity V (mPa·s) of the active ray-curable liquid substance are included in a coordinate region R (A, V) on an upper side of a contact angle-viscosity curve represented by a formula on a right side of the following Expression (1).

$$\text{Expression (1):} \quad R(A, V) > 0.55 \times A^2 - 22 \times A + 250$$

in Expression (1), the coordinate region R (A, V) is a region composed of an aggregate of the coordinates (A, V) of points on an upper side of the contact angle-viscosity curve represented by the formula on the right side of the Expression (1) in the coordinate system.

FIG. 1 is a conceptual diagram of a contact angle-viscosity curve obtained by plotting coordinates (A, V) of points indicating a contact angle A (°) and a viscosity V (mPa·s) corresponding to the contact angle A(°) in a coordinate system. When a coordinate (A, V) of a point indicating a contact angle A (°) and a viscosity V (mPa·s) corresponding to the contact angle A (°) is plotted in a coordinate system having a contact angle A (°) with an image on a horizontal axis and a viscosity V (mPa·s) on a vertical axis for the active ray-curable liquid substance at a temperature of 25 °C, the contact angle A (°) and the viscosity V (mPa·s) of the active-ray curable liquid substance are included in a coordinate region R (A, V) in FIG. 1, whereby the correlation between the contact angle of the active-ray curable liquid substance and the viscosity during post-pressing is good, and therefore, it is possible to provide an image forming method that further improves the coatability and adhesiveness of the image. In the following, each component will be described in detail in sequence, but the present invention is not limited thereto.

The image forming method of the present invention has "1. A fixing step of forming an image on a recording medium with a printing material containing a release agent", and then "2. A step of applying an active ray-curable liquid substance in a roll coating method", and a higher effect may be expected by having "3. A step of modifying a surface" between these steps.
FIG. 2 is a conceptual diagram showing the significance of surface treatment of an image according to the present invention, and FIG. 3 is a conceptual diagram representing a step of modifying a surface according to the present invention.

1. A fixing step of forming an image on a recording medium with a printing material containing a release agent

Details of the step of forming an image on the recording medium with the release agent and the printing material according to the present invention will be described later in "4. Image forming method".

2. A step of applying an active ray-curable liquid substance by a roll coating method

(2.1) Roll coating

In the present invention context, "roll coating" is defined as a process in which a coating liquid (e.g., paint) is applied by passing a flat object between two or more horizontal hard rolls (also referred to as "rollers") defined by JIS K 5500. FIG. 4 is a conceptual diagram showing an image forming method according to the present invention, and it represents "1. A fixing step of forming an image on a recording medium with a printing material containing a release agent" and "2. A step of applying an active ray-curable liquid substance by a roll coating method". As shown in FIG. 4, an active ray-curable liquid substance was applied to an image subjected to the fixing step by a varnish applicator. The varnish applicator used was Digi UV Coater 13RBS manufactured by BN Technology Corporation. The fixed image in the fixing step was formed by the image forming apparatus 500 of FIG. 7.
In actual application by a roll coating type varnish coater, a strong shearing force is applied at the time of application, and it is cured immediately after application. Therefore, the result is different from the evaluation result of the coatability in the bar coater application. The present invention provides preferable conditions for active ray-curable liquid substances and images in roll coating systems (speeds of 200 to 1500 mm/s), application rates of 2 to 10 g/m$^2$, and UV-cure times of 2 seconds or less.

(2.2) Active ray-curable liquid substance

The active ray-curable liquid substance according to the present invention is a substance which may be used as a varnish, and contains a reactive monomer and an acrylic resin polymer, and when a coordinate (A, V) of a point indicating the contact angle A (°) and the viscosity V (mPa·s) corresponding to the contact angle A (°) is plotted in a coordinate system in which the contact angle A (°) with an image is taken on a horizontal axis and the viscosity V (mPa·s) is taken as a vertical axis with respect to the active ray-curable liquid substance at a temperature of 25 °C, the contact angle A (°) and the viscosity V (mPa·s) of the active ray-curable liquid substance are included in a coordinate region R (A, V) above a contact angle-viscosity curve represented by the formula on a right side of the above-mentioned Expression (1).
Further, with respect to the active ray-curable liquid substance, when the contact angle with the image is set to A (°) and the viscosity is set to V (mPa·s), it is further preferable to satisfy the following Expressions (2) to (4).

$$\text{Expression (2):} \quad 0 \leq A < 30 \text{ and } 85 \leq V < 1000$$

$$\text{Expression (3):} \quad 30 \leq A < 40 \text{ and } 250 \leq V < 1000$$

$$\text{Expression (4):} \quad 40 \leq A < 50 \text{ and } 525 \leq V < 1000$$

In addition, it is more preferable from the viewpoint of expressing the effect that the coordinates of the points are included in the coordinate region R (A, V) on an upper side of a contact angle-viscosity curve represented by a formula on a right side of the following Expression (5) is included.

$$\text{Expression (5):} \quad R(A, V) > 0.72 \times A^2 - 22 \times A + 250$$

The contact angle-viscosity curve was obtained by a quadratic function approximation by the least squares

method based on measured values obtained by a contact angle and viscosity measurement method described later.

It is preferable that the active ray-curable liquid substance is an ultraviolet-curable resin liquid (varnish) from the viewpoint of expressing the effect. The active ray-curable liquid substance is preferably composed of a reactive monomer, an acrylic resin polymer, a polymerization initiator, and other surface tension modifier.

(2.2.1) Reactive monomer

A reactive monomer refers to a compound which is polymerized and cured by irradiation with active rays (ultraviolet rays, visible rays, and electron beams) and does not fall under any of the following photopolymerization initiators and pigment dispersants.

As the reactive monomer, a photopolymerizable compound may be used. The term "photopolymerization initiator" refers to a compound that generates an active species having a function capable of initiating a polymerization reaction of a polymerizable compound by irradiation with active rays. Further, the "pigment dispersant" is one which stably uniformly disperses a pigment in toner particles.

(Photopolymerizable compound)

As the photopolymerizable compound, various conventionally known photopolymerizable compounds may be used, but the compound is preferably an unsaturated carboxylic ester compound, and more preferably a (meth)acrylate.

Examples of the (meth)acrylate include difunctional (meth)acrylates such as triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, 1,10-decanediol di(meth)acrylate, neopentyl glycol di(meth)acrylate, dimethylol-tricyclodecanedi (meth)acrylate, neopentyl glycol di(meth)acrylate, polytetramethylene glycol di(meth)acrylate, polyethylene glycol diacrylate, tripropylene glycol diacrylate; and polyfunctional (meth)acrylates having 3 or more functions such as trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxytri(meth)acrylate, and pentaerythritol ethoxytetra(meth)acrylate.

The (meth)acrylate may be a modified product. Examples thereof include alkylene oxide modified (meth) acrylates exemplified as ethylene oxide modified (meth)acrylate such as ethylene oxide modified trimethylolpropane tri(meth)acrylate, ethylene oxide modified pentaerythritol tetraacrylate, and propylene oxide modified (meth)acrylate such as propylene oxide modified trimethylolpropane triacrylate; caprolactone modified (meth)acrylates such as caprolactone modified trimethylolpropane triacrylate; and caprolactam modified (meth)acrylates such as caprolactam modified dipentaerythritol hexa(meth)acrylate. Among them, alkylene oxide modified (meth)acrylate is preferred.

When the ratio of the above-described 3 or more functional monomer increases, the viscosity of the liquid is improved. It is possible to adjust the liquid viscosity by a monomer ratio of 3 or more functional monomer. In addition, a diluent such as vinylpyrrolidone or acryloyl morpholine may be used for adjusting the viscosity.

(2.2.2) Acrylic resin polymer

The acrylic polymer is obtained by polymerizing the following monomers, but is not limited thereto. Examples of the (meth)acrylate monomer include methyl (meth)acrylate, ethyl (meth)acrylate, n-butyl (meth)acrylate, isopropyl (meth) acrylate, isobutyl (meth)acrylate, t-butyl (meth)acrylate, n-octyl (meth)acrylate, 2-ethylhexyl (meth)acrylate, stearyl (meth)acrylate, lauryl (meth)acrylate, phenyl (meth)acrylate, diethylaminoethyl (meth)acrylate, dimethylaminoethyl (meth)acrylate, and derivatives of thereof.

Styrene may be copolymerized in the above acrylic polymer. When styrene is copolymerized, the copolymerization ratio of styrene is preferably 90% or less.

The molecular weight Mw of the acrylic polymer is preferably within a range of 3000 to 40000.

The ratio of the acrylic polymer to the liquid is preferably within a range of 5 to 20% from the viewpoint of adhesion, coatability and quality such as streaks.

(2.2.3) Polymerization initiator

The polymerization initiator includes a radical polymerization initiator when the active ray-curable compound is a compound having a radically polymerizable functional group, and includes a photoacid generator when the active ray-curable compound is a compound having a cationically polymerizable functional group. The polymerization initiator may be a combination of both a radical polymerization initiator and a photoacid generator.

The radical polymerization initiator includes a cleavage type radical polymerization initiator and a hydrogen

abstraction type radical polymerization initiator.

(Cleavage type radical polymerization initiator)

Examples of the cleaved radical polymerization initiator include acetophenone initiators such as diethoxyacetophenone, 2-hydroxy-2-methyl-1-phenylpropan-1-one, benzyldimethylketal, 1-(4-isopropylphenyl)-2-hydroxy-2-methylpropan-1-one, 4-(2-hydroxyethoxy)phenyl-(2-hydroxy-2-propyl)ketone, 1-hydroxycyclohexylphenylketone, 2-methyl-2-morpholino(4-thiomethylphenyl)propan-1-one and 2-benzyl-2-dimethylamino-1-(4-morpholinophenyl)-butanone; benzoin initiators such as benzoin, benzoin methyl ether and benzoin isopropyl ether; an acylphosphine oxide initiator such as 2,4,6-trimethylbenzoindiphenylphosphine oxide, benzil and methylphenylglyoxyester.

(Hydrogen extraction type radical polymerization initiator) Examples of the hydrogen-abstracted radical polymerization initiator include benzophenone initiators such as benzophenone, o-benzoyl methyl-4-phenylbenzophenone, 4,4'-dichlorobenzophenone, hydroxybenzophenone, 4-benzoyl-4'-methyl-diphenylsulfide, acryl benzophenone, 3,3',4,4'-tetra (t-butylperoxycarbonyl)benzophenone and 3,3'-dimethyl-4-methoxybenzophenone; thioxanthone initiators such as 2-isopropylthioxanthone, 2,4-dimethylthioxanthone, 2,4-diethylthioxanthone, 2,4-dichlorothioxanthone 2,4-diethylthioxane, and 2,4-dichloroxane; aminobenzophenone initiators such as Michler ketone and 4,4'-diethylaminobenzophenone; 10-butyl-2-chloroacrydone, 2-ethylanslaquinone, and 9,10-phenanthrenequinone, and camphorquinones.

(Photoacid generator)

Examples of the photoacid generator include triarylsulfonium hexafluorophosphate salt, iodonium (4-methylphenyl)(4-(2-methylpropyl)phenyl)hexafluorophosphate, triarylsulfonium hexafluoroantimonate and 3-methyl-2-butenyltetramethylenesulfonium hexafluoroantimonate.

(Blending amount)

The amount of the polymerization initiator to be blended is preferably within a range of 0.1 to 10% by mass, and more preferably within a range of 2 to 8% by mass, based on the total mass of the active ray-curable ink.

In addition, for adjusting the surface tension, a petroleum-based surfactant or a fluorine-based surfactant may be added. Anionic and nonionic surfactants are suitable for the petroleum-based and fluorine-based surfactants. Further, for the purpose of imparting roughness, organic or inorganic fine particles may be added.

(2.2.4) Relationship between contact angle (wettability) and surface tension

The wettability of a liquid to a solid surface is generally quantitatively expressed by the contact angle of the liquid, but what governs the wettability, that is, the contact angle $\theta$, is the balancing of the surface tension $\gamma_L$ and $\gamma_s$ of the liquid and the solid, respectively, and the interfacial tension $\gamma_{LS}$ between the liquid and the solid (refer to FIG. 5). The relationship is expressed as Young's equation.

$$\text{Young's equation:} \quad \gamma_s = \gamma_L \cos\theta + \gamma_{LS}$$

In order for an active ray-curable liquid substance (liquid) to be used as a varnish according to the present invention to be wetted into an image (solid), it is necessary that the surface tension of an image (solid) is larger than that of an active ray-curable liquid substance (liquid). However, even though the wettability may be increased, this alone is not sufficient for adhesion. Since the wax contained in the toner is present on the surface, the surface tension of the toner image is lowered, and the active ray-curable liquid substance (liquid) is hardly wetted. However, the wettability of an active ray-curable liquid substance (liquid) is not determined solely by the surface energy caused by the surface tension, and the viscosity of an active ray-curable liquid substance (liquid) also becomes an important element. The viscosity of the active ray-curable liquid substance (liquid) will be describe later.

As the surface tension adjustment agent, there is an oil-soluble surfactant. For example, as a surfactant, a petroleum-based surfactant and a fluorine-based surfactant are available. The amount of surfactant added should be greater than or equal to the critical micelle concentration in water. The amount added is preferably within a range of 0.05 to 10%.

(2.2.5) Contact angle A (°) with an image

FIG. 5 is a conceptual diagram representing a contact angle between an active ray-curable liquid substance and an image. As described above, the "contact angle" is to quantify the degree of coating, and it is defined as the angle between the liquid surface and the solid surface (the angle inside the liquid) at the place where the free surface of the static liquid contacts the solid wall. When a liquid is dropped on a solid surface, the liquid becomes round due to its own surface tension (refer to FIG. 5).

The contact angle A (°) with an image according to the present invention was measured by an instrument Dmo-701 manufactured by Kyowa Interface Science Co., Ltd. The contact angle of the active ray-curable liquid substance at 25 °C was measured at one second after dropping onto the image.

(2.2.6) Viscosity V (mPa·s)

The viscosity of the active ray-curable liquid substance (liquid) according to the present invention is improved when the ratio of 3 or more functional monomer increases. Further, in the case of a bifunctional monomer, the liquid viscosity may be adjusted by setting the monomer content ratio to be the same as 3 or more functional monomer. For adjustment of viscosity, a diluent such as vinylpyrrolidone or acryloyl morpholine may be used.

(Measuring method of viscosity V (mPa·s))

The viscosity of the active ray-curable liquid substance (liquid) was measured by immersing a vibrator in a liquid at room temperature (25 °C) with a vibrating viscometer FVM70A-STC and measuring the values after 30 seconds.

(2.2.7) Toner for developing an electrostatic charge image

It is preferable that the printing material according to the present invention is a toner for developing an electrostatic charge image, and it is preferable to contain a hydrocarbon, a polyethylene, a coal or a Fischer-Tropsch wax as a release agent from the viewpoint of wettability with an active ray-curable liquid substance.

It is preferable that the toner for developing an electrostatic charge image contains a resin, a colorant and a release agent, and that the resin is formed of a styrene-acrylic resin and an aromatic polyester resin from the viewpoint of low-temperature fixability and coatability of an active ray-curable liquid substance. Hereinafter, the configuration of the toner for developing electrostatic charge image will be described by dividing the configuration into (A) to (G).

(A) Toner base particle

The toner according to the present invention includes toner particles containing a binder resin. In the present invention, the toner particles refer to toner base particles to which an external additive is added, and an aggregate of toner particles is referred to as a toner.

Although the toner base particles may be generally used as toner particles even as they are, in the present invention, those obtained by adding an external additive to the toner base particles are used as toner particles.

Further, in the following description, when it is not necessary to distinguish between the toner base particle and the toner particle in particular, it is simply referred to as a "toner particle".

(A-1) Components that constitute toner particles

The toner base particles according to the present invention contain a binder resin. Further, the toner base particles according to the present invention may contain, if necessary, an internal additive such as a release agent (wax), a colorant, and a charge control agent, and other constituent components.

(Content of metal elements in toner particles)

The content of metallic elements in the toner particles may be measured by acid decomposition: inductively coupled plasma optical emission spectrometry (ICP-OES: Inductively Coupled Plasma-Optical Emission Spectrometry) in the following manner.

Three parts by mass of the sample (toner) was added to 35 parts by mass of a 0.2% by mass aqueous solution of polyoxyethylphenyl ether and dispersed. This dispersion was treated by an ultrasonic homogenizer US-1200T (manufactured by NISSEI Corporation) for 5 minutes at 25 °C, and the external additive is removed from the toner surface to obtain a sample for measurement.

(A-2) Average particle diameter of toner particles

The toner particles according to the present invention preferably have an average particle diameter within a range of, for example, 3 to 9 μm on a volume basis, and more preferably within a range of 3 to 8 μm.
This particle diameter may be controlled by, for example, the concentration of the flocculant to be used, the amount of the organic solvent added, the fusion time, and the composition of the polymer when the particles are produced by adopting an emulsion aggregation method described later.
When the volume-based median diameter is within the above-described range, transfer efficiency is increased, halftone image quality is improved, and image quality such as thin lines and dots is improved.
The volume-based median diameter of the toner particles is measured and calculated using a measuring device in which a computer system equipped with a data-processing software "Software V3. 51" is connected to a "Multisizer 3" (manufactured by Beckman Coulter, Inc.).
Specifically, 0.02 g of a sample (toner particles) is added to 20 mL of a surfactant solution (a surfactant solution obtained by diluting, for example, a neutral detergent containing a surfactant component with 10 times of pure water for the purpose of dispersion of toner particles) and adapted to the mixture. Then ultrasonic dispersion is performed for 1 minute to prepare a toner particle dispersion, and this toner particle dispersion is pipetted into a beaker containing "ISOTONII" (manufactured by Beckman Coulter, Inc.) in a sample stand until the display density of the measuring device becomes 8%.
Here, by setting this concentration range, a reproducible measurement value may be obtained. Then, in the measuring device, the number of measured particles is set to 25,000, the aperture diameter is set to 50 μm, and the frequency value is calculated by dividing the measurement range of 1 to 30 μm into 256. The particle size of 50% from the one with the larger volume integrated fraction is defined as the volume-based median diameter.

(A-3) Average circularity of toner particles

From the viewpoint of improving transfer efficiency, the toner particles according to the present invention preferably have an average circularity of 0.930 to 1.000, more preferably 0.950 to 0.995.
The average circularity of the toner particles is a value measured using FPIA-2100" (manufactured by Sysmex Corporation).
More specifically, after the sample (toner particles) is soaked in an aqueous solution containing a surfactant and dispersed by performing ultrasonic dispersing treatment for 1 minute, the sample is photographed in the HPF (high-magnification imaging) mode under the measuring condition "FPIA-2100" (manufactured by Sysmex Corporation), at an appropriate concentration of 3,000 to 10,000 HPF detected numbers, the circularity of each toner particle is calculated according to the following Formula (T), the circularity of each toner particle is added, and the result is divided by the total number of toner particles.

Circularity = (Peripheral length of a circle with the same projected area as the particle image)/(Peripheral length of the particle projected image) Formula (T):

(A-4) Measurement of toner storage elastic modulus

The viscoelastic properties of the toner are measured using a viscoelastic measuring device (rheometer) "RDA-II type" (manufactured by Rheometric Co., Ltd.) under the following measuring conditions.

<Measurement conditions>

Measuring jig: Use a parallel plate with a diameter of 10 mm.
Measurement sample: The toner is molded into a cylindrical sample having a diameter of about 10 mm and a height of 1.5 to 2.0mm after heating and melting.
Measurement frequency: 6.28 radians/sec
Measurement distortion setting: Set the initial value to 0.1% and perform measurement in the automatic measurement mode.
Sample elongation correction: Adjusted in automatic measurement mode.

(A-5) Toner softening point

The softening point (Tsp) of the toner is preferably 90 to 110 °C. When the softening point Tsp is within the above

range, the influence of heat applied to the toner at the time of fixing may be further reduced. Therefore, since image formation may be performed without imposing a burden on the colorant, it is expected to develop a wider and more stable color reproducibility.

(Controlling method of the softening point of the toner)

The softening point (Tsp) of the toner may be controlled by, for example, the following methods (1) to (3) alone or in combination.

(1) The type and composition ratio of the polymerizable monomer to be formed of the binder resin are adjusted.
(2) The molecular weight of the binder resin is adjusted by the type and the amount of the chain transfer agent added.
(3) Adjust the type and amount of wax.

(Measuring method of the softening point of the toner)

The softening point of the toner (Tsp) is determined as follows, using a "flow tester CFT-500" (manufactured by Shimadzu Corporation). The toner is molded into a cylindrical shape having a height of 10 mm, applying a pressure of 1.96 x $10^6$ Pa from the plunger while heating at a heating rate of 6 °C/min, so as to push out from the nozzle of diameter 1 mm and length 1 mm, thereby a curve of the flow tester plunger drop amount and temperature (softening flow curve) is drawn, and the temperature at which the material first flows out is the melting start temperature, and the temperature for a drop of 5 mm is the softening point temperature.

(B) Binder resin

A preferable resin as a main component of the binder resin according to the present invention is a styrene-acrylic resin or a polyester resin. From the viewpoint of coatability of an active ray-curable liquid substance, it is preferable to use styrene-acrylic resin as a main component.

(B-1) Styrene-acrylic resin

The styrene-acrylic resin is formed by subjecting at least a styrene monomer and a (meth)acrylic ester monomer to addition polymerization. Examples thereof include an acrylic resin and a styrene-acrylic copolymer resin. The styrene monomer referred to herein includes styrene represented by a structural formula of $CH_2=CH-C_6H_5$ and those having a known side chain or functional group in the styrene structure.

In addition, the (meth)acrylic ester monomer referred to here includes, in addition to an acrylic ester or a methacrylic ester represented by $CH_2=CHCOOR$ (R is an alkyl group), an ester having a known side chain or a functional group in a structure such as an acrylic ester derivative or a methacrylic ester derivative.

In this specification, the term "(meth)acrylic ester monomer" collectively refers to "acrylic ester monomer" and "methacrylic ester monomer".

An example of a styrene monomer and a (meth)acrylic ester monomer capable of forming a styrene-(meth)acrylic resin and is shown below.

(B-1-1) Styrene monomer

Examples of the styrene monomer include styrene, o-methylstyrene, m-methylstyrene, p-methylstyrene, α-methylstyrene, p-phenylstyrene, p-ethylstyrene, 2,4-dimethylstyrene, p-tert-butylstyrene, p-n-hexylstyrene, p-n-octylstyrene, p-n-nonylstyrene, p-n-decylstyrene, p-n-dodecylstyrene, and derivatives thereof.

(B-1-2) (Meth)acrylate monomer

Examples of the (meth)acrylate monomer include methyl (meth)acrylate, ethyl (meth)acrylate, n-butyl (meth) acrylate, isopropyl (meth)acrylate, isobutyl (meth)acrylate, t-butyl (meth)acrylate, n-octyl (meth)acrylate, 2-ethylhexyl (meth)acrylate, stearyl (meth)acrylate, lauryl (meth)acrylate, phenyl (meth)acrylate, diethylaminoethyl (meth)acrylate, dimethylaminoethyl (meth)acrylate, and derivatives thereof.

These (meth)acrylic acid ester monomers may be used alone or in combination of two or more.

(B-1-3) Preparation method of styrene-acrylic resin

The method for producing the styrene-acrylic resin is not particularly limited, and examples thereof include a method in which an optional polymerization initiator such as a peroxide, a persulfide, a persulfate, and an azo compound commonly used for polymerization of the above monomer is used, and polymerization is performed by a known polymerization method such as a bulk polymerization method, a solution polymerization method, an emulsion polymerization method, a miniemulsion method, or a dispersion polymerization method.

(B-1-4) Amorphous vinyl resin

The styrene-acrylic resin according to the present invention is an amorphous vinyl resin. In the present invention, "amorphous vinyl resin" refers to a resin having no clear endothermic peak in differential scanning calorimetry (DSC). Here, the "clear endothermic peak" specifically means a peak in which the half-value width of the endothermic peak is within 15 °C when measured at a temperature rising rate of 10 °C/minute in differential scanning calorimetry (DSC).

The amorphous vinyl resin is a resin obtained by polymerization using at least a vinyl monomer. The amorphous vinyl resin easily controls phase separation with a crystalline resin. The amorphous vinyl resin may be used alone or in combination of 2 or more.

The lower limit value of the content of the styrene-acrylic resin is preferably 5% by mass or more, more preferably 10% by mass or more, still more preferably 50% by mass or more, and particularly preferably 60% by mass or more, based on the total amount of the binder resin. When the content is 5% by mass or more, compatibility with the crystalline resin becomes good, and low-temperature fixability becomes good.

(B-1-5) Glass transition temperature

The amorphous vinyl resin is preferably an amorphous resin having a glass transition temperature (Tg) within a range of 25 to 60 °C, and more preferably an amorphous resin having a glass transition temperature (Tg) within a range of 35 to 55 °C.

It should be noted that, in this specification, the glass transition temperature (Tg) of the resin is a value measured using "Diamond DSC" (manufactured by Perkin Elmer Japan Co., Ltd.). A measurement procedure is as follows. 3.0 mg of a measurement sample (resin) is enclosed in an aluminum pan and set in a holder. An empty aluminum pan is used as a reference. The measurement condition is as follows: the measurement temperature is 0 to 200 °C, the temperature rise rate is 10 °C/min, and the temperature fall rate is 10 °C/min. The temperature is controlled by Heating-Cooling-Heating temperature control. Analysis is performed on the basis of the data in the second Heating. The extension line of the baseline prior to the rise of the first endothermic peak and the tangent line indicating the largest slope are drawn between the rising part of the first peak and the peak top, and the intersection point is defined as the glass transition temperature.

(B-1-6) Weight average molecular weight (Mw)

Further, it is preferable that the molecular weight measured by gel permeation chromatography (GPC) of the amorphous vinyl resin is within a range of 10000 to 100000 in terms of weight average molecular weight (Mw).

In this specification, the molecular weight of the resin by GPC is a value measured as follows.

Using a device "HLC-8120GPC" (manufactured by Tosoh Corporation), a column TSKgel guardcolumn SuperHZ-L, and "TSKgel SuperHZM-M" (manufactured by Tosoh Corporation), while holding the column temperature at 40 °C, tetrahydrofuran (THF) is flowed as a carrier solvent at a flow rate of 0.2 mL/min, and a measurement sample (resin) is dissolved in tetrahydrofuran so as to have a concentration of 1 mg/ml under a dissolution condition in which a treatment is performed for 5 minutes using an ultrasonic disperser at room temperature.

Then, a sample solution is obtained by treating with a membrane filter having a pore size of 0.2 μm, and 10 μL of this sample solution is injected into the apparatus together with the carrier solvent described above, and is detected using a refractive index detector (RI detector), and the molecular weight distribution possessed by the measurement sample is calculated using a calibration curve measured using monodisperse polystyrene standard particles. 10 points are used as polystyrene for calibration curve measurement.

(B-2) Polyester resin

Examples of the polyester resin include a crystalline polyester resin and an amorphous polyester resin. In the present invention, "crystalline resin" refers to a resin having a clear endothermic peak rather than a stepped endothermic change in differential scanning calorimetry (DSC). In addition, "amorphous resin" refers to a resin having a glass transition point (Tg) in an endothermic curve obtained by DSC (Differential Scanning Calorimetry), but no clear endothermic peak at

the time of melting point, that is, when the temperature rises. The definition of the "clear endothermic peak" will be described later.

(Crystalline resin)

The content of the crystalline resin according to the present invention is preferably within a range of 3 to 30% by mass based on the total amount of the binder resin. More preferably, it is within a range of 5 to 20% by mass, and particularly preferably within a range of 15 to 20% by mass. By placing a crystalline resin, in the fixing step, the melting becomes faster and the fixing strength is increased. As the crystalline resin, an aliphatic polyester resin is preferred.

(B-2-1) Crystalline polyester resin

As the crystalline resin, it is preferable to contain a crystalline polyester resin because the flexibility of the toner base particles is improved and the external additive is easily fixed suitably, and also from the viewpoint of low-temperature fixability.

The crystalline polyester resin refers to a resin having a clear melting peak rather than a stepped endothermic change in differential scanning calorimetry (DSC) among known polyester resins obtained by a polycondensation reaction of a carboxylic acid having 2 or more valences (polyvalent carboxylic acid component) and/or a hydroxycarboxylic acid and an alcohol having 2 or more valences (polyhydric alcohol component).

(Clear melting peak)

A clear melting peak is specifically meant a peak in which a half width of a melting peak in a second temperature rise process is within 15 °C, in a DSC curve obtained by differential scanning calorimetry of the crystalline polyester resin alone described above.

(Melting point)

The melting point of the crystalline polyester resin is preferably within a range of 65 to 85 °C, more preferably within a range of 75 to 85 °C. When the melting point of the crystalline polyester resin is within the above range, sufficient low-temperature fixability and excellent image storage property may be obtained. The melting point of the crystalline polyester resin may be controlled by the resin composition.

Here, the melting point of the crystalline polyester resin is a peak top temperature of the melting peak in the second temperature rise process in the DSC curve obtained by differential scanning calorimetry of the crystalline polyester resin alone described above, and may be measured by DSC using diamond DSC (manufactured by Perkin Elmer Co., Ltd.). Incidentally, when there are multiple melting peaks in the DSC curve, the peak top temperature of the melting peak having the largest endothermic amount is defined as the melting point.

Specifically, the sample is sealed in an aluminum pan KIT No.B0143013, and set in a sample holder of a thermal analyzer Diamond DSC (made by Perkin Elmer Corporation), and the temperatures are changed in the order of heating, cooling, and heating.

The temperature is raised from room temperature (25 °C) during the first heating, from 0 °C during the second heating, to 150 °C at a heating rate of 10 °C/min, and maintained at 150 °C for 5 minutes. The temperature is lowered from 150 °C to 0 °C at a cooling rate of 10 °C/min and maintained at 0 °C for 5 minutes. The temperature of the peak top of the endothermic peak in the endothermic curve obtained during the second heating is measured as the melting point.

<<Polyvalent carboxylic acid>>

A polyvalent carboxylic acid component for forming a crystalline polyester resin is a compound containing 2 or more carboxy groups in 1 molecules. Specific examples thereof include saturated aliphatic dicarboxylic acids such as succinic acid, sebacic acid, and dodecanedicarboxylic acid; alicyclic dicarboxylic acids such as cyclohexanedicarboxylic acid; aromatic dicarboxylic acids such as phthalic acid, isophthalic acid, and terephthalic acid; polyvalent carboxylic acids having 3 or more valences such as trimellitic acid and pyromellitic acid; and anhydrides of these carboxylic acid compounds, or alkyl esters having 1 to 3 carbon atoms. As the polyvalent carboxylic acid component for forming the crystalline polyester resin, a saturated aliphatic dicarboxylic acid is preferably used. These may be used alone, and 2 or more kinds thereof may be used in combination.

<<Polyhydric alcohol>>

A polyhydric alcohol component for forming a crystalline polyester resin is a compound containing 2 or more hydroxy groups in 1 molecules. Specific examples include aliphatic diols such as ethylene glycol, 1,2-propanediol, 1,3-propanediol, 1,4-butanediol, 1,5-pentanediol, 1,6-hexanediol, 1,7-heptanediol, 1,8-octanediol, neopentyl glycol, and 1,4-butenediol; polyhydric alcohols of three or more valences such as glycerin, pentaerythritol, trimethylolpropane, and sorbitol. As the polyhydric alcohol component for forming the crystalline polyester resin, an aliphatic diol is preferably used. These may be used alone, and 2 or more kinds thereof may be used in combination.

<Production method of crystalline polyester resin>

The method for producing the crystalline polyester resin is not particularly limited, and may be produced using a general polymerization method of a polyester in which the above-mentioned polyvalent carboxylic acid and polyhydric alcohol are reacted under a catalyst. For example, it is preferable to use the direct polycondensation method or the transesterification method according to the type of monomer.

Further, a linear aliphatic hydroxycarboxylic acid may be used in combination with the polyvalent carboxylic acid and/or the polyhydric alcohol.

Examples of the linear aliphatic hydroxycarboxylic acid for forming the crystalline polyester resin include 5-hydroxypentanoic acid, 6-hydroxyhexanoic acid, 7-hydroxypentanoic acid, 8-hydroxyoctanoic acid, 9-hydroxynonanonic acid, 10-hydroxydecanoic acid, 12-hydroxydodecanoic acid, 14-hydroxytetradecanoic acid, 16-hydroxyhexadecanoic acid, 18-hydroxyoctadecanoic acid, and lactone compounds in which these hydroxycarboxylic acids are cyclized, or alkyl esters with alcohols having 1 to 3 carbon atoms. These may be used alone, and 2 or more kinds thereof may be used in combination.

In addition, when a crystalline polyester resin is formed, it is easy to control the reaction by using a polyvalent carboxylic acid and a polyhydric alcohol component, so that a resin having a target molecular weight may be obtained, which is preferable.

(Catalyst)

Examples of the catalyst which may be used for producing the crystalline polyester resin include titanium catalysts such as titanium tetraethoxide, titanium tetrapropoxide, titanium tetraisopropoxide, and titanium tetrabutoxide, and tin catalysts such as dibutyltin dichloride, dibutyltin oxide, and diphenyltin oxide.

The ratio of the above polyvalent carboxylic acid component to the polyhydric alcohol component to be used is preferably within a range of 1.5/1 to 1/1.5, and more preferably within a range of 1.2/1 to 1/1.2, in an equivalent ratio [OH]/[COOH] of the hydroxy group [OH] of the polyhydric alcohol component and the carboxy group [COOH] of the polyvalent carboxylic acid component.

(Acid value)

The crystalline polyester resin preferably has an acid value within a range of 5 to 30 mgKOH/g, more preferably within a range of 10 to 25 mgKOH/g, and still more preferably within a range of 15 to 25 mgKOH/g. This acid value is obtained by expressing the mass of potassium hydroxide (KOH) necessary for neutralizing an acid contained in a sample of 1 g in mg units. The acid value of the resin is measured by the following procedure according to JIS K0070-1992.

(Preparation of reagent)

1.0 g of phenolphthalein is dissolved in 90 mL of ethyl alcohol (95 volume %), then ion-exchanged water is added to make 100 mL, and a phenolphthalein solution is prepared. 7 g of JIS special grade potassium hydroxide is dissolved in 5 mL of ion-exchanged water, and ethyl alcohol (95% by volume) is added to make 1 liter. The solution is placed in an alkali-resistant container to prevent contact with carbon dioxide gas, it is allowed to stand for 3 days, and then filtered to prepare a potassium hydroxide solution. Standardization shall be as described in JIS K0070-1992.

(Main test)

2.0 g of the pulverized sample is precisely weighed into a 200 mL conical flask, and 100 mL of a mixed solution of toluene/ethanol (toluene/ethanol is 2:1 in volume ratio) is added and dissolved over 5 hours. A few drops of phenolphthalein solution prepared as an indicator is then added and titrated using the prepared potassium hydroxide solution. The end point of the titration shall be when the light purple color of the indicator lasts for about 30 seconds.

(Blank test)

The same procedure as in the main test is performed, except that the sample is not used (i.e., only a mixed solution of toluene/ethanol (toluene/ethanol is 2:1 in volume ratio)). The titration results of the main test and the blank test are substituted into the following Formula (1) to calculate the acid value.

$$\text{Formula (1):} \quad A = [(C - B) \times f \times 5.6]/S$$

A: Acid number (mgKOH/g)
B: Amount (mL) of potassium hydroxide solution added at the time of the blank test
C: Amount (mL) of potassium hydroxide solution added in the main test
f: Factor of 0.1 mol/liter potassium hydroxide ethanol solution
S: Sample mass (g)

(Number average molecular weight (Mn))

The molecular weight of the crystalline polyester resin preferably has a weight average molecular weight (Mw) calculated from the molecular weight distribution measured by gel permeation chromatography (GPC) within a range of 5000 to 50000 and a number average molecular weight (Mn) within a range of 1500 to 25000.

Molecular weight measurement by GPC is performed as follows. That is, using a device "HLC-8320" (manufactured by Tosoh Corporation) and a column "TSKgel guardcolumn SuperHZ-L" and "TSKgel SuperHZM-M" (manufactured by Tosoh Corporation), tetrahydrofuran (THF) is flowed as a carrier solvent at a flow rate of 0.2 ml/min while holding the column temperature at 40 °C.

The measurement sample (crystalline polyester resin) is dissolved in tetrahydrofuran so as to have a concentration of 1 mg/ml under dissolution conditions in which treatment is performed using an ultrasonic disperser for 5 minutes at room temperature, and then treated with a membrane filter having a pore size of 0.2 μm to obtain a sample solution. 10 μL of this sample solution is injected into the apparatus together with the carrier solvent described above, detected using a refractive index detector (RI detector), and the molecular weight distribution of the measurement sample is calculated using a calibration curve measured using monodisperse polystyrene standard particles.

A standard polystyrene sample having a molecular weight of $6 \times 10^2$, $2.1 \times 10^3$, $4 \times 10^3$, $1.75 \times 10^4$, $5.1 \times 10^4$, $1.1 \times 10^5$, $3.9 \times 10^5$, $8.6 \times 10^5$, $2 \times 10^6$, and $4.48 \times 10^6$ manufactured by Pressure Chemical Corporation is used as a standard polystyrene sample for measuring a calibration curve, and a calibration curve is prepared by measuring a standard polystyrene sample having at least 10 points.

(B-3) Amorphous polyester resin

The aromatic polyester resin according to the present invention is an amorphous resin. By adding an aromatic polyester resin to the present invention, adhesion is improved, and therefore, addition of an aromatic polyester resin is preferred. It is considered that an aromatic polyester resin has an acid at a terminal or a side chain, and its adhesive property is improved due to its polarity.

The amorphous polyester resin is a polyester resin, which has no melting point and has a relatively high glass transition temperature (Tg) when subjected to differential scanning calorimetry (DSC). Further, since the monomer constituting the amorphous polyester resin is different from the monomer constituting the crystalline polyester resin, it may be distinguished from the crystalline polyester resin by analysis with a known instrument analysis technique such as nuclear magnetic resonance (NMR), for example.

The amorphous polyester resin is obtained by a polycondensation reaction of a carboxylic acid having 2 or more valences (polyvalent carboxylic acid) and an alcohol having 2 or more valences (polyhydric alcohol). There is no particular limitation on the specific amorphous polyester resin, and conventionally known amorphous polyester resins in the present technical field may be used.

<Production method of amorphous polyester resin>

A specific method for producing an amorphous polyester resin is not particularly limited, and the resin may be produced by polycondensing (esterifying) a polyvalent carboxylic acid and a polyhydric alcohol using a known esterification catalyst. The catalyst usable in the production, the temperature of the polycondensation (esterification), and the time of the polycondensation (esterification) are not particularly limited, and are the same as those of the above-mentioned crystalline polyester resin.

(Weight average molecular weight (Mw))

The weight average molecular weight (Mw) of the amorphous polyester resin is not particularly limited, but is preferably within a range of, for example, 5000 to 100000, and more preferably within a range of 5000 to 50000. When the weight average molecular weight Mw is 5000 or more, the heat storage resistance of the toner may be improved, and when the weight average molecular weight Mw is 100000 or less, the low-temperature fixing property may be further improved. The above weight average molecular weight (Mw) may be measured by the method described above.

(Other)

Examples of the polyvalent carboxylic acid and the polyhydric alcohol used in preparing the amorphous polyester resin are not particularly limited, and examples thereof include the following.

<<Polyvalent carboxylic acid>>

As the polyvalent carboxylic acid, an unsaturated aliphatic polyvalent carboxylic acid, an aromatic polyvalent carboxylic acid, and derivatives thereof are preferably used. If an amorphous resin may be formed, a saturated aliphatic polyvalent carboxylic acid may be used in combination.

Examples of the above-mentioned unsaturated aliphatic polyvalent carboxylic acid include unsaturated aliphatic dicarboxylic acids such as methylene succinic acid, fumaric acid, maleic acid, 3-hexenedioic acid, 3-octenedioic acid, and succinic acid substituted with an alkenyl group having 2 to 20 carbon atoms; unsaturated aliphatic tetracarboxylic acids such as 3-buten-1,2,3-tricarboxylic acid, 4-penten-1,2,4-tricarboxylic acid, and aconitic acid; and unsaturated aliphatic tetracarboxylic acids such as 4-penten-1,2,3,4-tetracarboxylic acid. Further, lower alkyl esters and acid anhydrides of these may also be used.

As the above-mentioned aromatic polyvalent carboxylic acid, examples thereof include: aromatic dicarboxylic acids such as phthalic acid, terephthalic acid, isophthalic acid, t-butylisophthalic acid, tetrachlorophthalic acid, chlorophthalic acid, nitrophthalic acid, p-phenylene diacetic acid, 2,6-naphthalenedicarboxylic acid, 4,4'-biphenyldicarboxylic acid, and anthracenedicarboxylic acid; aromatic tricarboxylic acids such as 1,2,4-benzenetricarboxylic acid (trimellitic acid), 1,2,5-benzenetricarboxylic acid (trimesic acid), 1,2,4-naphthalenetricarboxylic acid, and hemimellitic acid; aromatic tetracarboxylic acids such as pyromellitic acid, 1,2,3,4-butanetetracarboxylic acid; aromatic hexacarboxylic acids such as mellitic acid. Further, lower alkyl esters and acid anhydrides of these may also be used.

The above polyvalent carboxylic acid may be used alone or as a mixture of 2 or more thereof.

<<Polyhydric alcohol>>

As the polyhydric alcohol, an unsaturated aliphatic polyhydric alcohol, an aromatic polyhydric alcohol, and a derivative thereof are preferably used from the viewpoint of controlling compatibility with a crystalline polyester resin. If an amorphous resin may be obtained, a saturated aliphatic polyhydric alcohol may be used in combination.

Examples of the above-mentioned saturate aliphatic polyhydric alcohol include unsaturated aliphatic diols such as 2-buten-1,4-diol, 3-buten-1,4-diol, 2-butyn-1,4-diol, 3-butyn-1,4-diol, and 9-octadecen-7,12-diol. Also, these derivatives may be used.

Examples of the above aromatic polyhydric alcohol include bisphenols such as bisphenol A and bisphenol F, ethylene oxide adducts thereof, alkylene oxide adducts of bisphenols such as ethylene oxide adduct and propylene oxide adduct, 1,3,5-benzenetriol, 1,2,4-benzenetriol, and 1,3,5-trihydroxymethylbenzene. Also, these derivatives may be used. Among these, it is preferable to use a bisphenol A compound such as an ethylene oxide adduct of bisphenol A or a propylene oxide adduct from the viewpoint of easily optimizing the thermal characteristics in particular.

Further, the number of carbon atoms of the polyhydric alcohol having 3 or more valences is not particularly limited, but is preferably within a range of 3 to 20 carbon atoms because the thermal characteristics may be easily optimized.

The above polyhydric alcohol may be used alone or as a mixture of 2 or more thereof.

(B-3-1) Hybrid resin

It is preferable that the amorphous polyester resin according to the present invention is a hybrid amorphous polyester resin in which an amorphous polyester polymerization segment and a vinyl polymerization segment having a constitutional unit derived from styrene are chemically bonded.

More particularly, the amorphous polyester resin is preferably a hybrid amorphous polyester resin having a graft copolymer structure in which an amorphous polyester polymerization segment and a vinyl polymerization segment having

a constitutional unit derived from styrene are chemically bonded.

When such a hybrid amorphous polyester resin is used for the shell and the hybrid ratio (% by mass of the amorphous polyester polymerization segment based on the total amount of the hybrid amorphous polyester resin) is within the range of 70 to 99% by mass, coverage with respect to the core particles is facilitated. Therefore, it is difficult to bury the external additive present on the surface of the toner base particle even when a fixed image is formed, and the presence of the external additive may be maintained on the boundary line between the adjacent toner base particles.

Thus, the connection between the external additives existing on the boundary line serves as a transfer route of charges, and the sticking phenomenon may be further suppressed.

The constituent components and the content ratio of each segment in the hybrid amorphous polyester resin may be specified, for example, by NMR measurement or methylation reaction Py-GC/MS measurement.

(Amorphous polyester polymerization segment)

An amorphous polyester polymerization segment refers to a portion derived from a known polyester resin obtained by a polycondensation reaction with a polyvalent carboxylic acid component and a polyhydric alcohol component similar to an amorphous polyester resin, wherein a clear endothermic peak is not observed in differential scanning calorimetry (DSC) of a toner.

The amorphous polyester polymerization segment is not particularly limited as long as it is as defined above. For example, as long as a resin having a structure in which other components are copolymerized in a main chain by an amorphous polyester polymerization segment or a resin having a structure in which an amorphous polyester polymerization segment is copolymerized into a main chain composed of other components is used, if a toner containing this resin does not exhibit a clear endothermic peak as described above, the resin corresponds to a hybrid amorphous polyester resin having an amorphous polyester polymerization segment referred to in the present invention.

(Vinyl polymerization segment)

The hybrid amorphous polyester resin includes a vinyl polymerization segment containing a styrene-derived structural unit in addition to the above-mentioned amorphous polyester polymerized segment. The vinyl polymerization segment is not particularly limited as long as it contains a constitutional unit derived from styrene, but a styrene-(meth)acrylic ester polymerization segment (styrene-acrylic polymerization segment) is preferred in consideration of plasticity at the time of thermal fixing.

The styrene-acrylic polymerization segment is formed by subjecting at least a styrene monomer and a (meth)acrylic ester monomer to addition polymerization. Specific examples of the monomer capable of forming the styrene-acrylic polymerization segment include the same as those of the monomer described in the above styrene-acrylic resin, and therefore, description thereof will be omitted here.

The content ratio of the constitutional unit derived from styrene in the vinyl polymerization segment is preferably within a range of 40 to 95% by mass based on the total amount of the vinyl polymerization segment. In addition, the content ratio of the constitutional unit derived from the (meth)acrylic ester monomer in the vinyl polymerization segment is preferably within a range of 5 to 60% by mass based on the total amount of the vinyl polymerization segment.

Further, it is preferable that the vinyl polymerization segment is formed by addition polymerization of a compound for chemically bonding to the above-mentioned amorphous polyester polymerization segment in addition to the above-mentioned styrene monomer and (meth)acrylic ester monomer. Specifically, it is preferable to use a compound which is ester-bonded with a hydroxy group [-OH] derived from a polyhydric alcohol component or a carboxy group [-COOH] derived from a polyvalent carboxylic acid component contained in the above crystalline polyester polymerization segment.

Therefore, the vinyl polymerization segment is preferably formed by further polymerizing a compound which is capable of addition polymerization to styrene and a (meth)acrylic ester monomer and has a carboxy group [-COOH] or a hydroxy group [-OH].

Such compounds include, for example, compounds having carboxy groups such as acrylic acid, methacrylic acid, maleic acid, itaconic acid, cinnamic acid, fumaric acid, maleic acid monoalkyl ester, and itaconic acid monoalkyl ester; compounds having hydroxy groups such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, and polyethylene glycol (meth)acrylate.

The content ratio of the constitutional unit derived from the above compound in the vinyl polymerization segment is preferably within a range of 0.5 to 20% by mass based on the total amount of the vinyl polymerization segment.

The method of forming the styrene-acrylic polymerization segment is not particularly limited, and examples thereof include a method of polymerizing a monomer using a known oil-soluble or water-soluble polymerization initiator. Specific examples of the polymerization initiator are the same as those described in the section of the above hybrid crystalline polyester resin.

The content of the vinyl polymerization segment is preferably within a range of 2 to 25% by mass in the hybrid amorphous polyester resin.

<<Polyvalent carboxylic acid>>

Examples of the above-mentioned polyvalent carboxylic acid component include dicarboxylic acids such as oxalic acid, succinic acid, maleic acid, adipic acid, 6-methyladipic acid, azelaic acid, sebacic acid, nonandicarboxylic acid, decandicarboxylic acid, undecandicarboxylic acid, dodecanedicarboxylic acid, fumaric acid, citraconic acid, diglycolic acid, cyclohexane-3,5-diene-1,2-dicarboxylic acid, malic acid, citric acid, hexahydroterephthalic acid, malonic acid, pimellic acid, tartaric acid, mucic acid, phthalic acid, isophthalic acid, terephthalic acid, tetrachlorophthalic acid , chlorophthalic acid, nitrophthalic acid, p-carboxyphenylacetic acid, p-phenylene diacetic acid, m-phenylenediglycolic acid, p-phenylenediglycolic acid, o-phenylenediglycolic acid, diphenylacetic acid, diphenyl-p, p'-dicarboxylic acid, naphthalene-1,4-dicarboxylic acid, naphthalene-1,5-dicarboxylic acid, naphthalene-2,6-dicarboxylic acid, anthracendicarboxylic acid, dodecenyl succinic acid; trimellitic acid, pyromellitic acid, naphthalenetricarboxylic acid, naphthalenetetracarboxylic acid, pyrentricarboxylic acid, and pyrenetetracarboxylic acid.

These polyvalent carboxylic acids may be used alone or in combination of 2 or more thereof. Among these, aliphatic unsaturated dicarboxylic acids such as fumaric acid, maleic acid, and mesaconic acid, and aromatic dicarboxylic acids such as isophthalic acid and terephthalic acid, succinic acid, and trimellitic acid are preferably used.

<<Polyhydric alcohol>>

Examples of the polyhydric alcohol component include divalent alcohols such as ethylene glycol, propylene glycol, butanediol, diethylene glycol, hexanediol, cyclohexanediol, octanediol, decanediol, dodecanediol, bisphenol A ethylene oxide adduct, bisphenol A propylene oxide adduct; and trivalent or more polyols such as glycerin, pentaerythritol, hexamethylolmelamine, tetramethylol benzoguanamine, and tetraethylbenzoguanamine.

These polyhydric alcohol components may be used alone or as a mixture of 2 or more thereof. Of these, 2 valent alcohols such as bisphenol A ethylene oxide adduct and bisphenol A propylene oxide adduct are preferred.

(B-3-2) Production method of hybrid amorphous polyester resin

As a method of producing a hybrid amorphous polyester resin, an existing general scheme may be used. Representative methods include the following three methods (1) to (3).

(1) A method for producing a hybrid amorphous polyester resin by pre-polymerizing a vinyl polymerization segment and performing a polymerization reaction for forming an amorphous polyester polymerization segment in the presence of the vinyl polymerization segment.
(2) A method for producing a hybrid amorphous polyester resin by forming an amorphous polyester polymerization segment and a vinyl polymerization segment, respectively, and bonding them together.
(3) A method for producing a hybrid amorphous polyester resin by pre-polymerizing an amorphous polyester polymerization segment and performing a polymerization reaction for forming a vinyl polymerization segment in the presence of the amorphous polyester polymerization segment.

Among the above, when a styrene-acrylic resin and an aromatic polyester resin are contained, adhesion to the varnish is improved. Since the varnish contains an acrylic polymer, compatibility is improved.

(C) Release agents

The release agent is not particularly limited, and various known agents may be used. Examples thereof include polyolefin waxes such as polyethylene wax and polypropylene wax; branched chain hydrocarbon waxes such as microcrystalline wax; long-chain hydrocarbon waxes such as paraffin wax and sasol wax; dialkyl ketone waxes such as distearyl keton; ester waxes such as carnauba wax, montan wax, behenyl behenate, trimethylolpropan tribehenate, pentaerythritol tetrabehenate, pentaerythritol diacetate dibehenate, glycerin tribehenate, 1,18-octadecanediol distearate, tristearyl trimellitate, distearyl maleate;
and amide waxes such as ethylenediamine behenylamide, and trimellitic acid tristearylamide.

Among the above, non-polar waxes such as hydrocarbon waxes, polyethylene waxes, coal waxes, and Fischer-Tropsch waxes are preferred.

Since the above waxes have a large amount of branching, the size of the crystal is not extremely large, and therefore, the orientation of the hydrocarbon group on the surface is not so strong. As a result, the wettability with the

varnish is improved.

The content ratio of the release agent is preferably within a range of 1 to 30 parts by mass, more preferably within a range of 5 to 20 parts by mass, per 100 parts by mass of the binder resin. When the content ratio of the release agent is within the above range, sufficient fixing separation property is obtained.

Examples of the method of introducing the release agent into the toner particles include a method of aggregating and fusing fine particles composed of only a release agent together with amorphous resin fine particles, and crystalline resin fine particles in an aqueous medium in an aggregation and fusion step of a method of manufacturing a toner described later.

The release agent fine particles may be obtained as a dispersion in which a release agent is dispersed in an aqueous medium. The dispersion liquid of the release agent fine particles may be prepared by heating an aqueous medium containing a surfactant to a melting point or higher of the release agent, adding a molten release agent solution, applying mechanical energy such as mechanical stirring, or ultrasonic energy to finely disperse the release agent fine particles, and then cooling the release agent solution.

When the amorphous resin is, for example, a styrene-acrylic resin, the release agent may be introduced into the toner particles by compounding the release agent in advance with the amorphous resin particles (styrene-acrylic resin particles) to be subjected to the aggregation and fusion process. Specifically, a dispersion of amorphous resin fine particles containing a release agent may be prepared by a so-called mini-emulsion polymerization method in which a release agent is dissolved in a solution of a polymerizable monomer for forming a styrene-acrylic resin, which is added into an aqueous medium containing a surfactant, and a mechanical energy such as mechanical stirring or ultrasonic energy is applied and finely dispersed in the same manner as described above, and then a polymerization is performed at a desired polymerization temperature by adding a polymerization initiator.

(D) Colorant

As the colorant, a commonly known dye and pigment may be used. As a colorant for obtaining a black toner, various known ones may be arbitrarily used. Examples thereof are carbon black such as furnace black and channel black, magnetic substances such as magnetite and ferrite, dyes, and inorganic pigments including non-magnetic iron oxide. As a colorant for obtaining a toner of a color, a known one such as a dye or an organic pigment may be arbitrarily used.

Specifically, examples of the organic pigment include C.I. Pigment Red 5, 48:1, 48:2, 48:3, 53:1, 57:1, 81:4, 122, 139, 144, 149, 166, 177, 178, 222, 238, 269, C.I. Pigment Yellow 14, 17, 74, 93, 94, 138, 155, 180, 185, C.I. Pigment Orange 31, 43, C.I. Pigment Blue 15:3, 60, 76.

Examples of the dye include C.I. Solvent Red 1, 49, 52, 58, 68, 11, 122, C.I. Solvent Yellow 19, 44, 77, 79, 81, 82, 93, 98, 103, 104, 112, 162, C.I. Solvent Blue 25, 36, 69, 70, 93, 95. As a colorant for obtaining a toner of each color, the colorant may be used alone or in combination of two or more for each color.

The content ratio of the colorant is preferably within a range of 1 to 20 parts by mass, more preferably within a range of 4 to 15 parts by mass, per 100 parts by mass of the binder resin.

(E) Charge control agent

As the charge control agent, various known compounds may be used. The content ratio of the charge control agent is usually within a range of 0.1 to 5.0 parts by mass per 100 parts by mass of the binder resin.

(F) External additive

Although the toner particles according to the present invention may constitute the toner of the present invention as they are, in order to improve fluidity, chargeability, and cleaning property, an external additive such as a fluidizing agent or a cleaning aid which is a so-called post-treatment agent may be added to the toner particles to constitute the toner of the present invention.

Examples of the post-treatment agent include inorganic oxide fine particles made of silica fine particles, alumina fine particles, titanium oxide fine particles, inorganic stearic acid compound fine particles such as stearic acid aluminum fine particles and stearic acid zinc fine particles, or inorganic titanium acid compound fine particles such as strontium titanate and zinc titanate. These may be used alone or in combination of two or more.

It is preferable that these inorganic fine particles be subjected to surface treatment by a silane coupling agent, a titanium coupling agent, a higher fatty acid, or a silicone oil in order to improve the heat-resistant storage property and improve the environmental stability.

The total amount of these various external additives added is within a range of 0.05 to 5 parts by mass, preferably within a range of 0.1 to 3 parts by mass, per 100 parts by mass of the toner. In addition, various kinds of external additives may be used in combination.

(G) Developer

The toner of the present invention may be used as a magnetic or non-magnetic one component developer, but may be mixed with a carrier and used as a two component developer.

As the carrier, it is possible to use magnetic particles made of conventionally known materials such as metals such as iron, ferrite and magnetite, and alloys of these metals with metals such as aluminum and lead, and among these, it is preferable to use ferrite particles.

Further, as the carrier, a coating carrier in which the surface of the magnetic particles is coated with a coating agent such as a resin, a resin dispersion type carrier obtained by dispersing the magnetic fine powder in the binder resin may be used.

As the carrier, those having a volume average particle diameter within a range of 15 to 100 μm are preferred, and those having a volume average particle diameter within a range of 25 to 80 μm are more preferred.

(2.2.8) Production method of toner

As a method of producing a toner, a kneading and pulverizing method, an emulsion dispersion method, a suspension polymerization method, a dispersion polymerization method, an emulsion polymerization method, an emulsion polymerization aggregation method, a mini-emulsion polymerization aggregation method, an encapsulation method, and other known methods may be mentioned, but an emulsion polymerization aggregation method is preferably used from the viewpoint of production cost and production stability in consideration of the need to obtain a toner having a small particle size in order to achieve high image quality of an image.

The emulsion polymerization aggregation method is a method of manufacturing a toner by mixing a dispersion liquid of fine particles made of a binder resin (hereinafter also referred to as "binder resin fine particles") produced by the emulsion polymerization method with a dispersion liquid of fine particles made of a colorant (hereinafter also referred to as "colorant fine particles"), and slowly performing aggregation while balancing the repulsive force of the surface of the fine particles by pH adjustment and the coagulating force by addition of a coagulant made of an electrolyte, performing association while controlling the average particle size and particle size distribution, and simultaneously performing shape control by performing fusion between the fine particles by heating and stirring.

In the method for producing a toner, a binder resin fine particle to be formed when an emulsion polymerization aggregation method is used may have a configuration of 2 or more layers made of a binder resin having different compositions. In this case, a method in which a polymerization initiator and a polymerizable monomer are added to a dispersion of a first binder resin fine particle prepared by an emulsion polymerization treatment (first stage polymerization) according to a conventional method, and this system is subjected to a polymerization treatment (second stage polymerization) may be employed.

In addition, the toner may be configured as a core-shell structure, and the method for manufacturing the toner of the core-shell structure may be obtained by forming core particles by associating, aggregating, and fusing the binder resin fine particles for the core and the colorant fine particles, then adding the binder resin fine particles for the shell for forming the shell layer in the dispersion of the core particles, and forming a shell layer by aggregating and fusing the binder resin fine particles for the shell on the surface of the core particles to cover the surface of the core particles.

In the case where the toner has a core-shell structure, the manufacturing method thereof will be described in detail below by dividing it into the steps (1) to (9).

(1) A colorant fine particle dispersion preparation step of preparing a dispersion of colorant fine particles in which a colorant is dispersed in a fine particle form.
(2-1) A core binder resin fine particle polymerization step for obtaining core binder resin fine particles made of a core binder resin containing a main wax and an internal additive and preparing this dispersion liquid.
(2-2) A shell binder resin fine particle polymerization step for obtaining shell binder resin fine particles and preparing this dispersion liquid.
(3) An aggregation and fusion step in which the binder resin fine particles for the core and the colorant fine particles are aggregated and fused in an aqueous medium to form an associated particle to be a core particle.
(4) A first ripening step in which the associated particles are ripened by thermal energy to control their shape to obtain core particles.
(5) A shell layer forming step for forming particles having a core-shell structure by adding binder resin fine particles for a shell to form a shell layer into a dispersion liquid of core particles and aggregating and fusing the binder resin fine particles for a shell on the surface of the core particles.
(6) A second ripening step in which the particles of the core-shell structure are ripened by thermal energy to control the shape thereof to obtain toner particles of the core-shell structure.
(7) A filtration and washing step for solid-liquid separation of toner particles from a dispersion system (aqueous

medium) of cooled toner particles and removal of surfactants from the toner particles.

(8) A drying step to dry the washed toner particles and, if necessary, the step (9) may be performed after the drying step.

(9) An external additive treatment step of adding an external additive to the toner particles subjected to the drying treatment may be performed.

(1) A colorant fine particle dispersion preparation step

In this step, a process of preparing a dispersion of colorant fine particles in which a colorant is dispersed in a fine particle form is performed by adding a colorant in an aqueous medium and subjecting the dispersion to a dispersion treatment by a disperser.

Specifically, the dispersion treatment of the colorant is performed in an aqueous medium in a state in which the surfactant concentration is set to be equal to or higher than the critical micelle concentration (CMC). The surfactant used in the aqueous medium used at the time of polymerization of the above colorant fine particle dispersion will be described later in a section of (2-1) A core binder resin fine particle polymerization step. The disperser used for the dispersion treatment is not particularly limited, but preferably includes an ultrasonic disperser, a pressure disperser such as a mechanical homogenizer, a Manton Gaulin homogenizer, or a pressure homogenizer, a sand grinder, a medium type disperser such as a Getzmann mill or a diamond fine mill.

The dispersion diameter of the colorant fine particles in this colorant fine particle dispersion is preferably within a range of 40 to 200 nm with a volume-based median diameter.

The volume-based median diameter of this colorant fine particle is measured by using "MICROTRAC UPA-150 (manufactured by HONEYWELL Co., Ltd.)" under the following measurement conditions.

<Measurement conditions>

| | |
|---|---|
| Sample refractive index: | 1.59 |
| Sample specific gravity: | 1.05 (in terms of spherical particles) |
| Solvent refractive index: | 1.33 |
| Viscosity of solvent: | 0.797(30 °C), 1.002(20 °C) |
| 0 point adjustment: | The ion exchanged-water was charged into the measurement cell and adjusted. |

(2-1) A core binder resin fine particle polymerization step

In this step, a process is performed in which a polymerization treatment is performed to prepare a dispersion of fine binder resin particles made of a core binder resin containing a main wax, and an internal additive.

In one preferred example of the polymerization treatment in this step, a polymerizable monomer solution containing a main wax, and an internal additive, if necessary, is added in an aqueous medium containing a surfactant having a critical micelle concentration (CMC) or less, and mechanical energy is added to form a liquid droplet, and then a water-soluble polymerization initiator is added, and the polymerization reaction proceeds in the liquid droplet.

In addition, an oil-soluble polymerization initiator may be contained in the liquid droplets. In such a step, a process of applying mechanical energy to perform forced emulsify (formation of droplets) is essential.

Such mechanical energy application means may include a means for applying strong stirring or ultrasonic vibration energy such as a homomixer, ultrasonic wave, or a Manton Gaulin homogenizer.

(Surfactant)

Here, a surfactant added in an aqueous medium and used during polymerization of the above colorant fine particle dispersion and the core binder resin fine particle will be described.

Examples of the surfactant include, but are not limited to, the following. Ionic surfactants such as: sulfonate (sodium dodecylbenzene sulfonate, sodium arylalkylpolyether sulfonate), sulfate ester salt (sodium dodecyl sulfate, sodium tetradecyl sulfate, sodium pentadecyl sulfate, sodium octyl sulfate), fatty acid salt (sodium oleate, sodium laurate, sodium caprate, sodium caprilate, sodium caproate, potassium stearate, calcium oleate) may be exemplified as preferred surfactants.

In addition, nonionic surfactants such as polyethylene oxide, polypropylene oxide, a combination of polypropylene oxide and polyethylene oxide, an ester of polyethylene glycol and a higher fatty acid, an alkylphenol polyethylene

oxide, an ester of a higher fatty acid and a polyethylene glycol, an ester of a higher fatty acid and a polypropylene oxide, and a sorbitan ester may also be used.

(Polymerization initiator)

Hereinafter, a polymerization initiator used in the core binder resin fine particle polymerization step will be described.

Examples of the water-soluble polymerization initiator include persulfates such as potassium persulfate and ammonium persulfate, azobisaminodipropane acetate, azobiscyanovaleric acid and a salt thereof, and hydrogen peroxide.

Examples of the oil-soluble polymerization initiator include azo-based or diazo-based polymerization initiators such as 2,2'-azobis-(2,4-dimethylvaleronitrile), 2,2'-azobisisobutyronitrile, 1,1'-azobis(cyclohexane-1-carbonitrile), 2,2'-azobis-4-methoxy-2,4-dimethylvaleronitrile, and azobisisobutyronitrile; peroxide polymerization initiators such as benzoyl peroxide, methyl ethylketone peroxide, diisopropyl peroxide, cumene hydroperoxide, t-butylhydroperoxide, di-t-butyl peroxide, dicumyl peroxide, 2,4-dichlorobenzoyl peroxide, lauroyl peroxide, 2,2-bis-(4,5-t-butylperoxycyclohexyl)propane, tris-(t-butylperoxy) triazine; and polymeric initiators having peroxides in their side chains.

(Chain transfer agent)

Hereinafter, a chain transfer agent used in the core binder resin fine particle polymerization step will be described. For the purpose of adjusting the molecular weight of the binder resin for the obtained core, a commonly used chain transfer agent may be used.

The chain transfer agent is not particularly limited. For example, mercaptans such as n-octyl mercaptan, n-decyl mercaptan, and tert-dodecyl mercaptan; a mercaptopropionic acid ester such as n-octyl-3-mercaptopropionic acid ester, terpinolene, and $\alpha$-methylstyrene dimer may be used.

(2-2) A shell binder resin fine particle polymerization step

In this step, a process is performed in which a polymerization treatment is performed in the same manner as in the core binder resin fine particle polymerization step of (2-1) described above to prepare a dispersion of the shell binder resin fine particles made of a binder resin for a shell.

(3) An aggregation and fusion step

In this step, a process is performed in which the binder resin fine particles for the core and the colorant fine particles are aggregated and fused in an aqueous medium to form associated particles to become core particles.

As a method of aggregation and fusion in this step, a salting-out/fusing method using the colorant fine particles obtained by the colorant fine particle dispersion preparation step of (1) and the core binder resin fine particles obtained by the core binder resin fine particle polymerization step of (2-1) is preferred.

In addition, in the aggregation and fusion step, the internal additive fine particles such as wax fine particles and a charge control agent together with the core binder resin fine particles and the colorant fine particles may be aggregated and fused.

Here, "salting out/fusing" means that, when aggregation and fusion are advanced in parallel and grown to a desired particle diameter, an aggregation stopping agent is added to stop the particle growth, and further, heating for controlling the particle shape is continuously performed if necessary.

In the salting-out/fusing method, a salting-out agent composed of an alkali metal salt, an alkaline earth metal salt or a 3 valent metal salt is added as a flocculant having a critical flocculation concentration or more in an aqueous medium in which fine particles of a core binder resin and fine particles of a colorant are present, and then the salt precipitation is progressed by heating to a temperature equal to or higher than a glass transition point of the fine particles of the core binder resin and equal to or higher than a melting peak temperature of the fine particles of the cote binder resin and the fine particles of the colorant, and simultaneously aggregation and fusion are performed.

Here, the alkali metal salt and the alkaline earth metal salt which are salting-out agents include are as follows. Examples of the alkali metal include lithium, and potassium, sodium, and examples of the alkaline earth metal include magnesium, calcium, strontium, and barium. Preferable metal are potassium, sodium, magnesium, calcium, and barium. When the aggregation and fusion step of (3) is performed by salting out/fusing, it is preferable to shorten the time for leaving after adding the salting out agent as much as possible.

Although the reason for this is not clear, the aggregation state of the particles fluctuates depending on the leaving time after the salting-out, and there arises a problem that the particle size distribution becomes unstable or the surface

property of the fused toner fluctuates.

Further, it is necessary that the temperature at which the salting-out agent is added is at least equal to or lower than the glass transition point of the core binder resin fine particles.

As a reason for this, when the temperature at which the salting-out agent is added is equal to or higher than the glass transition point of the core binder resin fine particles, although the salting-out/fusing of the core binder resin fine particles proceeds quickly, the control of the particle diameter cannot be performed, and a problem arises in which particles having a large particle diameter are generated.

The range of the addition temperature may be equal to or lower than the glass transition point of the binder resin, but is generally within a range of 5 to 55 °C, preferably within a range of 10 to 45 °C.

Further, a salting-out agent is added at a temperature lower than or equal to the glass transition point of the core binder resin fine particles, and then the temperature is increased as quickly as possible, and is heated to a temperature equal to or higher than the glass transition point of the core binder resin fine particles and equal to or higher than the melting peak temperature (°C) of the core binder resin fine particles and the colorant fine particles.

As the time to this temperature rise is preferably less than 1 hour. Further, although it is necessary to quickly perform the temperature rise, the temperature rise rate is preferably 0.25 °C/min or more. Although the upper limit is not particularly clear, there is a problem in that it is difficult to control the particle size because the salting-out proceeds rapidly when the temperature is raised instantaneously, and the temperature rise rate of 5 °C/minute or less is preferable.

By the salting-out/fusing method described above, a dispersion liquid of the associated particles (core particles), which is formed by salting-out/fusing the core binder resin fine particles and arbitrary fine particles, is obtained.

In addition, the term "aqueous medium" refers to a medium composed of 50 to 100% by mass of water and 0 to 50% by mass of a water-soluble organic solvent.

Examples of the water-soluble organic solvent include methanol, ethanol, isopropanol, butanol, acetone, methyl ethyl ketone, and tetrahydrofuran. Of these, an alcohol-based organic solvent which does not dissolve the produced resin is preferred.

(4) A first ripening step

In this step, a process is performed in which the associated particles are aged by thermal energy. By controlling the heating temperature of the aggregation and fusion step of (3) and in particular the heating temperature and time of the first ripening step of (4), it is possible to control the surface of the core particles formed with a certain particle diameter and narrow distribution to have a smooth and uniform shape.

Specifically, the heating temperature is lowered in the aggregation and fusion step of (3) to suppress the progress of fusion between the core binder resin fine particles to promote uniformity, and the heating temperature is lowered and the time is lengthened in the first ripening step to control the surface of the core particles to have a uniform shape.

(5) A shell layer forming step

In this step, a shelling process is performed in which a dispersion liquid of the shell binder resin fine particles is added to the dispersion liquid of the core particles, the shell binder resin fine particles are aggregated and fused to the surface of the core particles, and the shell binder resin fine particles are coated on the surface of the core particles to form particles having a core-shell structure.

This step is a preferred manufacturing condition to provide both low temperature fixability and heat resistant storage performance. In addition, when a color image is formed, it is preferable to perform this shell layer formation in order to obtain high color reproducibility for the secondary color.

Specifically, a dispersion of the binder resin fine particles for a shell is added in a state in which the heating temperature in the aggregation and fusion step of (3) and the first ripening step of (4) is maintained, and the shell binder resin fine particles are slowly coated on the surface of the core particles over a period of several hours while continuing the heating stirring to form particles of the core-shell structure. The heating and stirring time is preferably within a range of 1 to 7 hours, and particularly preferably within a range of 3 to 5 hours.

(6) A second ripening step

In this step, a terminating agent such as sodium chloride is added at a stage where the particles of the core-shell structure become a predetermined particle diameter by the shell layer forming step of (5) to stop the particle growth, and then heating and stirring is continued for several hours in order to fuse the fine particles of the shell binding resin adhering to the core particles.

The thickness of the layer of the shell binder resin fine particles covering the surface of the core particles is set within the range of 100 to 300 nm. In this manner, the shell layer is formed by fixing the shell binder resin fine particles to the

surface of the core particles, and the toner particles having a rounded and uniform shape and a core-shell structure are formed.

(7) A filtration and washing step

In this step, first, a process of cooling a dispersion of toner particles is performed. Cooling is preferably performed at a cooling rate in the range of 1 to 20 °C/min. The cooling treatment method is not particularly limited, and a method of introducing a refrigerant from the outside of the reaction vessel to cool the reaction vessel, or a method of directly introducing cold water into the reaction system to cool the reaction vessel may be exemplified.

Next, the toner particles are separated from the dispersion liquid of the toner particles cooled to a predetermined temperature, and thereafter, a washing treatment is performed to remove adhering substances such as a surfactant and a salt precipitant from the toner cake which has been separated by the solid-liquid separation and in which the toner particles in a wet state are aggregated in a cake shape.

Here, the filtration treatment method is not particularly limited, and examples thereof include a centrifugal separation method, a reduced pressure filtration method performed using a Nutsche filter, or a filtration method performed using a filter press.

(8) A drying step

In this step, a process of drying the toner cake subjected to the cleaning treatment is performed. The dryer used in this step may be a spray dryer, a vacuum freeze dryer, or a vacuum dryer, and it is preferable to use a static shelf dryer, a mobile shelf dryer, a fluidized bed dryer, a rotary dryer, or a stirred dryer.

The moisture of the toner particles subjected to the drying treatment is preferably 5% by mass or less, and more preferably 2% by mass or less. When the toner particles subjected to the drying treatment are aggregated with a weak inter-particle attraction, the aggregate may be subjected to a crushing treatment. As a crushing apparatus, a mechanical crushing apparatus such as a jet mill, a Henschel mixer, a coffee mill, or a food processor may be used.

(9) An external additive treatment step

In this step, a process of adding an external additive to the toner particles subjected to the drying treatment in the drying step of (8) is performed. As a method of adding an external additive, for example, it may be added using a mechanical mixing device such as a Henschel mixer or a coffee mill.

3. A step of modifying a surface

The image forming method of the present invention has "1. A step of forming an image on a recording medium with a printing material containing a release agent", and thereafter "2. A step of applying an active ray-curable liquid substance in a roll coating method", and a higher effect may be expected by having "3. A step of modifying a surface" between the above-described two steps.

The HLB value of the petroleum-based nonionic surfactant contained in the aqueous solution to be applied in the step of modifying a surface is preferably within a range of 8 to 13, and more preferably within a range of 9 to 13.

FIG. 6 is a conceptual diagram of a step of modifying a surface in an image forming step according to the present invention.

FIG. 2 is a conceptual diagram showing the significance of the surface treatment of an image according to the present invention, and shows the effect of passing through the step of modifying a surface of the fixed image after image formation and before application of the active ray-curable liquid substance. When a coordinate (A, V) of a point indicating the contact angle A (°) and the viscosity V (mPa·s) corresponding to the contact angle A (°) and is plotted in a coordinate system having a contact angle A (°) with an image on a horizontal axis and a viscosity V (mPa·s) on a vertical axis for the active ray-curable liquid substance at a temperature of 25 °C, the coordinate of the point is included in a coordinate region R (A, V) in the coordinate system.

Examples of the means for modifying the surface include a corona treatment and a treatment with a coating liquid. In the corona treatment, since an image is charged, there is a risk of causing a conveyance failure in the cut paper, and a treatment with a coating liquid is preferable. As the coating liquid, it is preferable to apply an aqueous solution from the viewpoint of safety.

An aqueous solution may be applied after the image is formed online using an image forming apparatus as shown in FIG. 7, then an active ray-curable liquid substance may be applied, or the previous three steps may be performed independently.

As a treatment liquid for modifying the surface according to the present invention, an oil-soluble petroleum-based

surfactant is preferably used, and a nonionic surfactant is used. Further, an oil-soluble fluorine-based surfactant may be used, and a nonionic surfactant is used.

The HLB of nonionic surfactants is preferably within the range of 8 to 13. When it is 8 or more, it is easy to dissolve in water, and when it is 13 or less, the surface tension of the aqueous solution becomes low, which makes it easy to apply to an image.

In addition to nonionic, anionic and cationic surfactants are also available, but anionic and cationic surfactants have strong orientation of fluorine, and fluorine exits on the surface after coating, so that an active ray-curable liquid substance may be repelled.

4. Image forming method

The image forming method of the present invention mainly has "1. A fixing step of forming an image on a recording medium with a printing material containing a release agent", and thereafter "2. A step of applying an active ray-curable liquid substance in a roll coating method", and further has "3. A step of modifying the surface" between the step 1 and the step 2.

Specific examples of the image forming method according to the present invention include the following methods (1) and (2).

(1) An image forming method of a so-called direct transfer method in which an image is formed by performing a step of directly transferring a toner image formed by developing an electrostatic latent image formed on an electrostatic latent image carrier with a toner to an image support, and a process of heating and fixing a toner image carried on the image support to form an image.

(2) An image forming method of a so-called intermediate transfer system, in which an image is formed by transferring a toner image formed by developing an electrostatic latent image formed on an electrostatic latent image carrier with toner to an intermediate transfer member, transferring the toner image transferred on the intermediate transfer member to an image support, and heating and fixing the toner image carried on the image support.

In the image forming method in "1. A step of forming an image on a recording medium with a printing material containing a release agent" according to the present invention, an image forming method of an intermediate transfer method according to the above item (2) is employed, and an image forming method will be mainly described with the item (2) in the following.

(Image forming apparatus)

First, the overall configuration of the image forming apparatus of the intermediate transfer system will be described with reference to the drawings. FIG. 7 is a diagram schematically showing a configuration of a multifunction printer (MFP) which is an example of an image forming apparatus of an intermediate transfer system, and it is an example of an image forming apparatus in which a tandem type color image forming unit according to the present invention is mounted.

In FIG. 7, an image forming apparatus 500 (for example, MFP500 manufactured by Konica Minolta, Inc.) includes a control unit 100 and an image forming unit 200. The image forming unit 200 typically forms a color or monochrome image on a sheet P loaded in the sheet feeding cassette 1 based on image information obtained by optically reading the content of a document to be printed by the scanner unit 800. An Auto document feeder (ADF) 900 is connected to the scanner unit 800, and documents to be printed are sequentially conveyed from this ADF900.

More specifically, the image forming unit 200 includes process units 30C, 30M, 30Y, and 30K (hereinafter collectively referred to as "process unit 30") for each of four colors of cyan (C), magenta (M), yellow (Y), and black (K).

The process unit 30 of the respective colors are arranged along the moving direction of the transfer belt 8, and the toner images of the corresponding colors are sequentially formed on the transfer belt 8.

The process units 30C, 30M, 30Y, and 30K are respectively provided with primary transfer rollers 10C, 10M, 10Y, and 10K (hereinafter also collectively referred to as "primary transfer roller 10"), photoreceptors 11C, 11M, 11Y, and 11K (hereinafter also collectively referred to as "photoreceptor 11"), developing rollers 12C, 12M, 12Y, and 12K (hereinafter also collectively referred to as "developing roller 12"), print heads 13C, 13M, 13Y, and 13K (hereinafter also collectively referred to as "print head 13"), charging chargers 14C, 14M, 14Y, and 14K (hereinafter also collectively referred to as "charging charger 14"), and toner units 15C, 15M, 15Y, and 15K (hereinafter also collectively referred to as "toner unit 15").

When each process unit 30 receives a print request corresponding to a user’s operation on the operation panel 300, it forms a toner image of each color constituting an image to be printed on the photoreceptor 11, and transfers the toner image of each color formed on the transfer belt 8 at the same timing as that of the other process unit 30. At this time, the primary transfer roller 10 moves the toner image on the corresponding photoreceptor 11 to the transfer belt 8.

In each process unit, the surface of the photoreceptor 11 on which the charging charger 14 rotates is charged, and the surface of the photoreceptor 11 is exposed according to image information to be printed by the print head 13. Thus, an electrostatic latent image representing a toner image to be formed is formed on the surface of the photosensitive element 11. Thereafter, the developing roller 12 supplies the toner of the toner unit 15 to the surface of the photoreceptor 11. Thus, an electrostatic latent image is developed as a toner image on the photoreceptor 11. Thereafter, the primary transfer roller 10 sequentially transfers the toner images developed on the surface of each photoreceptor 11 onto the transfer belt 8 which is rotated by the drive motor 9. As a result, the toner images of the respective colors are superimposed to form a toner image to be transferred onto the sheet P.
The image forming unit 200 includes a density sensor 31 for detecting the toner density on the transfer belt 8 in order to stabilize the density of the toner image to be printed.
As the image stabilization control using the density sensor 31, the developing output of the developer is changed on the transfer belt 8 to form several patches of the toner density detecting patch printed with different toner densities. The image forming section 200 detects the toner density by using the density sensor 31, and feeds back the toner density to the development output of the developing device in accordance with the result, thereby making it possible to always obtain a stable toner density at the time of printing. It is possible to execute image stabilization control when the main switch of the apparatus main body is turned on, when the toner cartridge is replaced, or when a predetermined number of sheets are printed.
The image forming unit 200 includes a sheet feeding cassette 1. In the paper feeding cassette 1, the sheet feed rollers 1A take out the sheets P loaded in the paper feeding cassette 1. The removed paper P is conveyed along the conveying path 3 by a conveying roller 74. The conveying roller 74 waits for the paper P at a position reaching the timing sensor. Thereafter, the conveying roller 74 conveys the paper P to the secondary transfer roller 5 in accordance with the timing at which the toner image formed on the transfer belt 8 reaches the secondary transfer roller 5.
The toner image on the transfer belt 8 is transferred onto the paper P by the secondary transfer roller 5 and the opposing roller 6. Typically, by applying a predetermined potential (for example, about +2000 V) corresponding to the charge of the toner image to the secondary transfer roller 5, a force is generated to electrically attract the toner image on the transfer belt 8 toward the secondary transfer roller 5, thereby transferring the toner image to the paper P.
Further, the toner image transferred onto the paper P is processed by a fixing device including a fixing belt 605 and a pressure roller 609, thereby the toner image is fixed on the sheet P. The paper P on which the toner image has been fixed is output to a sheet discharge tray. This completes a series of printing processes. In MFP500, the fixing belts 605 are an example of a fixing member, and the pressure rollers 609 are an example of a pressure member.
Along the conveying path 3, the smoothness sensor 66 is provided. The smoothness sensor 66 detects the smoothness of the surface of the paper P on the conveyance path 3 and outputs it to the control unit 100. MFP500 may comprise any type of sensor, including an air-leak type, as a smoothness sensor 66.

## EXAMPLES

Hereinafter, the present invention will be specifically described with reference to Examples, but the present invention is not limited thereto. In the examples, "parts" or "%" is used, but unless otherwise specified, it indicates "parts by mass" or "% by mass". Further, "% by mass" may be called as "mass%".

[Preparation of toner]

A. Preparation of each dispersion

(A.1) Preparation of amorphous vinyl resin particle dispersion X1

(1) First stage polymerization: Preparation of a dispersion liquid a1 of resin fine particles

To a 5L reaction vessel fitted with a stirring device, a temperature sensor, a cooling pipe and a nitrogen introducing device, 8 parts by mass of sodium dodecyl sulfate and 3000 parts by mass of ion-exchanged water were charged, and the internal temperature of the reaction vessel was raised to 80 °C while stirring at a stirring speed of 230 rpm under a nitrogen stream.
After raising the temperature, an aqueous solution obtained by dissolving 10 parts by mass of potassium persulfate in 200 parts by mass of ion-exchanged water was added to the obtained mixture solution, and the temperature of the obtained mixed solution was again set at 80 °C.
To the mixture liquid, a monomer mixture liquid 1 having the following composition was added dropwise over 1 hours, and then the mixed liquid was heated at 80 °C for 2 hours and stirred to perform polymerization to prepare a dispersion liquid a1 of resin fine particles.

(Composition of monomer mixture liquid 1)

| | |
|---|---|
| Styrene: | 480 parts by mass |
| n-Butyl acrylate: | 250 parts by mass |
| Methacrylic acid: | 68 parts by mass |

(2) Second stage polymerization: Preparation of dispersion a2 of resin fine particles

A solution in which 7 parts by mass of sodium polyoxyethylene(2)dodecyl ether sulfate was dissolved in 3000 parts by mass of ion-exchanged water was charged into a 5L reaction vessel fitted with a stirring device, a temperature sensor, a cooling pipe, and a nitrogen introducing device. The solution was heated to 80 °C, and then 80 parts by mass of a dispersion liquid a1 (in terms of solid content) of the above prepared resin fine particles and a monomer mixture liquid 2 having the following composition in which the following monomer and the release agent were dissolved at 90 °C were added, and the mixture was mixed and dispersed for 1 hours by a mechanical disperser "CLEARMIX" (manufactured by M Technique Co., Ltd., "CLEARMIX" is a registered trademark of the company) having a circulation path to prepare a dispersion liquid containing emulsified particles (oil droplets). The melting point of the hydrocarbon-based wax (HNP-0190) described below is 73 °C.

(Composition of monomer mixture liquid 2)

| | |
|---|---|
| Styrene: | 285 parts by mass |
| n-Butyl acrylate: | 95 parts by mass |
| Methacrylic acid: | 20 parts by mass |
| Hydrocarbon waxes (HNP-0190): | 190 parts by mass |

Then, an initiator solution in which 6 parts by mass of potassium persulfate was dissolved in 200 parts by mass of ion-exchanged water was added to the dispersion, and the obtained dispersion was subjected to polymerization by heating and stirring at 84 °C for 1 hours to prepare a dispersion liquid a2 of resin fine particles.

(3) Third stage polymerization: Preparation of amorphous vinyl resin particle dispersion X1

Further, 400 parts by mass of ion-exchanged water was added to the dispersion liquid a2 of the resin fine particles, and after sufficiently mixing, a solution obtained by dissolving 11 parts by mass of potassium persulfate in 400 parts by mass of ion-exchanged water was added to the obtained dispersion liquid, and under a temperature condition of 82 °C, a monomer mixture liquid 3 having the following composition was added dropwise over a period of 1 hours.

After completion of the dropping, the polymerization was carried out by heating and stirring the dispersion for 2 hours, and then cooled to 28 °C, thereby preparing an amorphous vinyl resin particle dispersion X1 made of a vinyl resin (styrene-acrylic resin).

(Composition of monomer mixture liquid 3)

| | |
|---|---|
| Styrene: | 307 parts by mass |
| n-Butyl acrylate: | 147 parts by mass |
| Methacrylic acid: | 52 parts by mass |
| n-Octyl-3-mercaptopropionate: | 8 parts by mass |

When physical properties were measured for the obtained amorphous vinyl resin particle dispersion X1, the volume-based median diameter (D50) of the amorphous resin fine particles was 220 nm, the glass transition temperature

(Tg) was 46 °C, and the weight average molecular weight (Mw) was 32000.

(A.2) Preparation of crystalline (non-modified aliphatic) polyester resin particle dispersion CP1

To a 5L reaction vessel fitted with a stirring device, a temperature sensor, a cooling tube and a nitrogen introducing device, 300 parts by mass of sebacic acid as a polyvalent carboxylic acid and 170 parts by mass of a 1,6-hexanediol as a polyhydric alcohol were charged, and the internal temperature was raised to 190 °C over a period of 1 hour with stirring.

After confirming that the mixture was uniformly stirred, $Ti(OBu)_4$ was charged as a catalyst in an amount of 0.003% by mass with respect to the amount of the polyvalent carboxylic acid charged. While distilling off the water to be produced, the internal temperature was increased from 190 °C to 240 °C for a period of 6 hours, and the dehydration condensation reaction was continuously carried out over a period of 6 hours under the condition of a temperature of 240 °C, thereby obtaining a crystalline polyester resin.

The crystalline polyester resin had a melting point (Tm) of 66.8 °C, and a number average molecular weight (Mn) of 6300.

A 3L reaction vessel with a jacket equipped with a condenser, a thermometer, a water dropping device, and an anchor wing (BJ-30N manufactured by Tokyo Rikakikai Co., Ltd.) was charged with 300 parts by mass of the above-mentioned crystalline polyester resin, 160 parts by mass of methyl ethyl ketone (solvent), and 100 parts by mass of isopropyl alcohol (solvent), and the resin was dissolved while being stirred and mixed at 100 rpm with maintaining at 70 °C in a water circulation type constant temperature bath.

Thereafter, the stirring rotation speed was set at 150 rpm, the water circulation type constant temperature tank was set at 66 °C, and 17 parts by mass of 10% by mass of ammonia water (reagent) was charged over a period of 10 minutes, and then ion-exchanged water kept at 66 °C was added dropwise at a rate of 7 parts by mass/min to a total of 900 parts by mass to undergo phase inversion to obtain an emulsified liquid.

Immediately, 800 parts by mass of the obtained emulsified liquid and 700 parts by mass of ion-exchanged water were placed in a 2 liter eggplant flask and set in an evaporator (manufactured by Tokyo Rikakikai Co., Ltd.) equipped with a vacuum control unit via a trap sphere. The eggplant flask was heated in a hot water bath at 60 °C, while rotating, and the solvent was removed by reducing the pressure to 7 kPa while taking care of bumping. When the solvent recovery amount became 1100 parts by mass, it was returned to normal pressure, and the eggplant flask was water-cooled to obtain a dispersion liquid.

There was no solvent odor in the obtained dispersion. The volume-based median diameter (D50) of the resin particles in this dispersion was 130 nm. Thereafter, ion-exchanged water was added to adjust the solid concentration to 20% by mass, which was used as a crystalline polyester resin dispersion CP1.

(A.3) Preparation of amorphous (aromatic) polyester-resin particle dispersion AP-1

A mixed liquid of a monomer of a vinyl resin described below, a monomer having a substituent that reacts with both an amorphous polyester resin and a vinyl resin, and a polymerization initiator was placed in a dropping funnel.

| | |
|---|---|
| Styrene: | 80.0 parts by mass |
| n-Butyl acrylate: | 20.0 parts by mass |
| Acrylic acid: | 10.0 parts by mass |
| Di-t-butyl peroxide (polymerization initiator): | 16.0 parts by mass |

Further, monomers of the following amorphous polyester resin was placed in a 4 necked flask equipped with a nitrogen introducing pipe, a dehydrating pipe, a stirrer, and a thermocouple, and heated to 170 °C, and dissolved.

| | |
|---|---|
| Bisphenol A ethylene oxide 2 mol adduct: | 59.1 parts by mass |
| Bisphenol A propylene oxide 2 mol adduct: | 281.7 parts by mass |
| Terephthalic acid: | 63.9 parts by mass |
| Succinic acid: | 48.4 parts by mass |

While stirring, the mixed liquid placed in the dropping funnel was added dropwise to a 4 necked flask over a period of 90 minutes, and after aging for 60 minutes, unreacted monomers were removed under reduced pressure (8kPa). Thereafter, 0.4 parts by mass of $Ti(OBu)_4$ was charged as an esterification catalyst, and the temperature was increased to

235 °C, and the reaction was carried out under normal pressure (101.3 kPa) for 5 hours, further under reduced pressure (8 kPa) for 1 hour.

Then, the mixture was cooled to 200 °C, and the reaction was carried out under reduced pressure (20 kPa), followed by de-solvation to obtain an amorphous polyester resin. The obtained amorphous polyester resin had a weight average molecular weight (Mw) of 24000, an acid value of 16.2 mgKOH/g, and a glass transition point (Tg) of 60 °C.

Next, 100 parts by mass of the obtained amorphous polyester resin was dissolved in 400 parts by mass of ethyl acetate (manufactured by Kanto Chemical Co., Ltd.) and mixed with 638 parts by mass of a sodium lauryl sulfate solution having a 0.26% by mass concentration prepared in advance.

While the mixed solution was stirred, ultrasonic dispersing treatment was performed at a V-LEVEL of 400 μA for 30 minutes by an ultrasonic homogenizer US-150T (manufactured by Nippon Seiki Co., Ltd.). Thereafter, in a state of being warmed to 40 °C, a diaphragm vacuum pump V-700 (BUCHI Co., Ltd.) was used, and ethyl acetate was completely removed while stirring under reduced pressure for 3 hours to obtain an amorphous polyester resin particle dispersion AP-1 having a solid content of 13.5% by mass. The amorphous polyester resin particles in the dispersion had a volume-based median diameter (D50) of 98 nm.

(A.4) Preparation of colorant dispersion Cy1

90 parts by mass of sodium dodecyl sulfate was added to 1600 parts by mass of ion-exchanged water. While stirring this solution, 420 parts by mass of copper phthalocyanine (C.I. Pigment Blue 15:3) was gradually added, and then the mixture was subjected to a dispersion treatment using a stirring device "CLEARMIX" (manufactured by M Technique Co., Ltd.) to prepare an aqueous dispersion of colorant particles (colorant dispersion Cy1).

For the obtained aqueous dispersion (Cyl) of colorant particles, the volume-based median diameter ((D50) of the colorant particles was found to be 110 nm.

B. Preparation of toners 1 to 4

(B.1) Preparation of toner 1

To a reaction vessel fitted with a stirring device, a temperature sensor and a cooling tube, 315 parts by mass (in terms of solid content) of an amorphous vinyl resin particle dispersion X1 (for a core), 30 parts by mass of a crystalline polyester resin particle dispersion CP1 (in terms of solid content), 1% by mass of a sodium dodecyl diphenyl ether disulfonate salt (in terms of solid content) based on a resin ratio, and 2000 parts by mass of ion-exchanged water were charged. Under room temperature (25 °C), a 5 mol/L aqueous sodium hydroxide solution was added to adjust the pH to 10.

Further, 30 parts by mass (in terms of solid content) of the colorant particle dispersion Cy1 was added, and a solution prepared by dissolving 30 parts by mass of magnesium chloride in 30 parts by mass of ion-exchanged water was added over a period of 10 minutes at 30 °C under stirring. After leaving it for 3 minutes, the temperature was raised to 80 °C over a period of 60 minutes.

The agitation speed was adjusted so that the growth rate of the particle diameter was 0.01 μm/min, and the particle was grown until the volume-based median diameter (D50) measured by a Coulter Multisizer 3 (manufactured by Beckman Coulter) was 6.0 μm.

Then, an aqueous solution in which 190 parts by mass of sodium chloride was dissolved in 760 parts by mass of ion-exchanged water was added to stop the growth of the particle diameter. Next, the temperature was raised and the mixture was stirred at 80°C to proceed the fusing of the toner base particles until the average circularity of the toner base particles became 0.965, and the following washing and drying step was performed.

(B.1.1) Washing and drying step

A dispersion of toner base particles generated in the aggregation and fusion step was subjected to solid-liquid separation using a basket type centrifuge to form a wet cake of toner base particles. This wet cake was washed with ion-exchanged water at 35 °C, and then adjusted to a pH of 4.0 with 25% aqueous sodium hydroxide solution (equivalent to Net strength 0.10). The cake was washed with ion-exchanged water at 35 ° C until the electrical conductivity of the filtrate became 5 μS/cm in the basket type centrifuge, and then transferred to a "flash jet dryer (manufactured by Seishin Enterprise Co., Ltd.)" and dried until the moisture content became 0.5% by mass to prepare "toner base particles 1".

(B.1.2) External additive treatment step

To the above "toner base particles 1", 1% by mass of hydrophobic silica (number average primary particle diameter = 12 nm) and 0.3% by mass of hydrophobic titania (number average primary particle diameter = 20 nm) were

added and mixed by a Henschel mixer to prepare a toner 1.

(B.2) Preparation of toner 2

(B.2.1) Preparation of aliphatic polyester resin A

In a reaction vessel equipped with a cooling pipe, a stirrer and a nitrogen introducing pipe, an aliphatic monomer (1,6-hexanediol) to be an alcohol component constitutional unit and an aliphatic monomer (adipic acid) to be an acid component constitutional unit were charged at a molar ratio of about 1:1, and the mixture was reacted at 180 °C under a nitrogen stream for 8 hours while distilling off the water to be generated.

Then, the reaction was carried out under a stream of nitrogen while gradually increasing the temperature to 230 °C for 4 hours while distilling off the water formed, and the reaction was further carried out under a reduced pressure of 0.007 to 0.026 MPa for 1 hour to remove the produced resins. A predetermined amount of acetone was charged into an autoclave reaction tank equipped with a thermometer, an agitator, and a nitrogen introduction pipe to obtain an aliphatic polyester resin A.

(B.2.2) Synthesis of aromatic monomer (propylene oxide adduct of bisphenol A) (Preliminary preparation for preparation of aromatic polyester resin a)

First, an alkylene oxide adduct of bisphenol A (bis A-PO adduct) was synthesized as follows. To an autoclave equipped with a stirring and temperature adjusting function, bisphenol A (228 parts by mass) and potassium hydroxide (2 parts by mass) were charged, and after raising the temperature to 135 °C, propylene oxide (139 parts by mass) was introduced under a pressure condition of 0.1 to 0.4 MPa, and then the mixture was reacted for 3 hours.

An adsorbent (product name "Kyoward 600", manufactured by Kyowa Chemical Industry Co., Ltd.) (16 parts by mass) was charged into the reaction product thus obtained, and the mixture was stirred and aged for 30 minutes while holding at 90 °C.

Subsequent filtration gave a propylene oxide adduct of bisphenol A. This propylene oxide adduct was a mixture in which the sum (m + n) of m and n in the following Chemical formula (I) was 2 and 3.

Chemical formula (I)

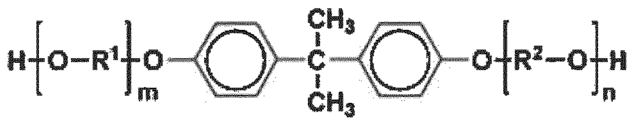

In Chemical formula (I) above, $R^1$ and $R^2$ each independently represent an alkylene group, and m and n each independently represent 0 or positive integers, but the sum of the two (m + n) is in the range of 1 to 16.

(B.2.3) Preparation of aromatic polyester resin a

In a reaction vessel equipped with a cooling pipe, a stirrer and a nitrogen introduction pipe, an aromatic monomer (propylene oxide adduct of bisphenol A) to be an alcohol component constitutional unit and an aromatic monomer (terephthalic acid) to be an acid component constitutional unit were charged at a molar ratio of about 1:1, and the mixture was reacted at 180 °C under a nitrogen stream for 8 hours while distilling off the water to be generated.

Then, while gradually raising the temperature to 230 °C, under a nitrogen stream, the generated water was reacted for 4 hours while distilling off, and further reacted for 1 hours under a reduced pressure of 0.007 to 0.026 MPa, and the generated aromatic polyester resin a was taken out.

60 g of the above aliphatic polyester resin A, 140 g of an aromatic polyester resin a, 10 g of a copper phthalocyanine pigment, and 20 g of a petroleum-based wax (HNP-0190) were mixed by a Henschel mixer. The mixture was melt-kneaded at a temperature of 130 °C and the kneaded product was pulverized by a jet mill to obtain particles having a particle diameter of 6 $\mu$m.

(B.2.4) External additive treatment step

These particles were subjected to external addition treatment in the same manner as in Toner 1 to produce Toner 2.

(B.3) Preparation of toner 3

(B.3.1) Use of amorphous vinyl resin particle dispersion X1 and crystalline polyester resin particle dispersion CP1 (for a core)

To a reaction vessel fitted with a stirring device, a temperature sensor and a cooling tube, 315 parts by mass of an amorphous vinyl resin particle dispersion X1 (for a core) prepared in (A.1) (in terms of solid content), 30 parts by mass of a crystalline (non-modified aliphatic) polyester resin particle dispersion CP1 prepared in (A.2) (in terms of solid content), 1% by mass of a sodium dodecyl diphenyl ether disulfonate (in terms of solid content) based on a resin ratio, and 2000 parts by mass of ion-exchanged water were charged. Under room temperature (25 °C), a 5 mol/L aqueous sodium hydroxide solution was added to adjust the pH to 10.

(B.3.2) Use of colorant particle dispersion Cy1

Further, 30 parts by mass (in terms of solid content) of the colorant particle dispersion Cy1 prepared in (A.4) was loaded, and a solution obtained by dissolving 30 parts by mass of magnesium chloride in 30 parts by mass of ion-exchanged water was added under stirring at 30 °C over a period of 10 minutes. After standing for 3 minutes, the temperature was increased to 80 °C over a period of 60 minutes.

(B.3.3) Use of amorphous (aromatic) polyester resin particle dispersion AP-1

Then, 74 parts by mass (in terms of solid content) of the amorphous (aromatic) polyester resin particle dispersion liquid AP-1 prepared in (A.3) was charged over a period of 30 minutes, and at a time point when the supernatant of the reaction liquid became transparent, an aqueous solution in which 190 parts by mass of sodium chloride was dissolved in 760 parts by mass of ion-exchanged water was added to stop the growth of the particle diameter.

The agitation speed was adjusted so that the growth rate of the particle diameter was 0.01 μm/min, and the particle was grown until the volume-based median diameter (D50) measured by a Coulter Multisizer 3 (manufactured by Beckman Coulter) was 6.0 μm.

Then, an aqueous solution in which 190 parts by mass of sodium chloride was dissolved in 760 parts by mass of ion-exchanged water was added to stop the growth of the particle diameter. Next, the temperature was raised and the mixture was stirred at 80 °C to proceed the fusing of the toner base particles until the average circularity of the toner base particles became 0.965, and the following washing and drying step was performed.

(B.3.4) Washing and drying step

A dispersion of toner base particles generated in the aggregation and fusion step was subjected to solid-liquid separation using a basket type centrifuge to form a wet cake of toner base particles. This wet cake was washed with ion-exchanged water at 35 °C, and then adjusted to a pH of 4.0 with 25% aqueous sodium hydroxide solution (equivalent to Net strength 0.10).

The cake was washed with ion-exchanged water at 35 °C until the electrical conductivity of the filtrate became 5 μS/cm in the basket type centrifuge, and then transferred to a "flash jet dryer (manufactured by Seishin Enterprise Co., Ltd.)" and dried until the moisture content became 0.5% by mass to prepare "toner base particles 1".

(B.3.5) External additive treatment step

To the above "toner base particles 1", 1% by mass of hydrophobic silica (number average primary particle diameter = 12 nm) and 0.3% by mass of hydrophobic titania (number average primary particle diameter = 20 nm) were added and mixed by a Henschel mixer to prepare a toner 3.

(B.4) Preparation of toner 4

Toner 4 was prepared in the same manner as preparation of Toner 1, except that the wax of Toner 1 was changed from petroleum-based wax (hydrocarbon-based wax: HNP-0190) to ester-based wax (behenyl behenate).

The compositions of the toners 1 to 4 are as shown in Table I.

Table I

| Toner No. | Resin type | | | | | Wax | | Colorant Fine Particle No. |
|---|---|---|---|---|---|---|---|---|
| | Dispersion No. | Dispersion No. | Dispersion No. | Resin particles 1 | Resin particles 2 | Type | Product name | |
| 1 | X1 | CP1 | - | - | - | Petroleum-based | Hydrocarbon-based Wax (HNP-0190) | Cy1 |
| 2 | - | - | - | Aromatic polyester resin a | Aliphatic polyester resin A | Petroleum-based | Hydrocarbon-based Wax (HNP-0190) | - |
| 3 | X1 | CP1 | AP-1 | - | - | Petroleum-based | Hydrocarbon-based Wax (HNP-0190) | Cy1 |
| 4 | X1 | CP1 | - | - | - | Ester-based | Behenyl behenate | Cy1 |

[Preparation of active ray-curable liquid substances 1 to 11]

Active ray-curable liquid substances 1 to 11 were prepared by changing the ratios and types of materials of A to F as shown in Table II.

Table II

| Active ray-curable liquid substance No. | A | B | C | D1 | D2 | E | F |
|---|---|---|---|---|---|---|---|
| | Reactive monomer 1 [parts by mass] | Reactive monomer 2 [parts by mass] | Polymerization initiator [parts by mass] | Surfactant 1 [parts by mass] | Surfactant 2 [parts by mass] | Diluent [parts by mass] | Molecular weight of polymer (Mw) |
| 1 | 65.0 | 11 | 5 | 0.40 | - | 12.60 | 8000 |
| 2 | 60.0 | 21 | 5 | 0.25 | - | 5.75 | 8000 |
| 3 | 61.9 | 23 | 5 | 0.10 | - | 0.00 | 10000 |
| 4 | 55.9 | 24 | 5 | - | 0.1 | 0.00 | 10000 |
| 5 | 69.0 | 0 | 5 | 0.65 | - | 20.35 | 8000 |
| 6 | 64.0 | 10 | 5 | 0.30 | - | 13.70 | 8000 |
| 7 | 64.0 | 8 | 5 | - | 0.1 | 13.90 | 10000 |
| 8 | 71.0 | 0 | 5 | 0.35 | - | 18.65 | 8000 |
| 9 | 72.0 | 5 | 5 | 0.30 | - | 10.70 | 8000 |
| 10 | 60.0 | 10 | 5 | - | 0.1 | 15.90 | 8000 |
| 11 | 62.0 | 10 | 5 | - | 0.1 | 10.90 | 10000 |

A: 1,6-Hexanediol diacrylate (5 mPa·s)
B: Trimethylolpropane triacrylate (100 mPa·s)
C: Benzophenone
D1: Fluorine-based nonionic surfactant (containing a polyoxyethylene group as a hydrophilic group)
D2: Petroleum-based nonionic surfactant (Polyoxyethylene lauryl ether)
E: Vinylpyrrolidone
F: Styrene/Methyl acrylate

In addition, for the aqueous solutions 1 to 4 used in the step of modifying the surface, those having HLB values of Table III were used, respectively.

Table III

| Aqueous Solution No. | Surfactant | | |
|---|---|---|---|
| | Property | Type | HLB value |
| 1 | Nonionic | 2% aqueous solution of polyoxyethylene lauryl ether | 9.3 |
| 2 | Nonionic | 2% aqueous solution of polyoxyethylene lauryl ether | 12.1 |
| 3 | Nonionic | 2% aqueous solution of polyoxyethylene lauryl ether | 13.7 |
| 4 | Nonionic | 2% aqueous solution of polyoxyethylene lauryl ether | 8.1 |

[Examples 1 to 10 and Comparative Examples 1 to 6]

For the image formation used in the examples and comparative examples, the above-described image forming apparatus was used. After the fixed image was formed by the image forming apparatus using the toners 1 to 4 described in Table I under the following image forming conditions, the surface treatment of the image by the above-mentioned "3. A step of modifying a surface" was performed by using the aqueous solutions 1 to 4 described in Table III. Thereafter, the application of the active ray-curable liquid substance described in Table II was performed by the method described in "2. A step of applying an active ray-curable liquid substance by a roll coating method".

(Image forming conditions)

Paper passing speed: 400 mm/sec

Paper type: POD-157 Gloss coat paper (manufactured by Oji Paper Co., Ltd.)

Toner: Toners 1 to 4 are used, and the amounts of the toners attached to the images are 8 $g/m^2$.

[Evaluation of coatability (wettability)]

(Evaluation method)

The active ray-curable liquid substance was applied and cured by a UV varnish coater (using Digi UV Coater manufactured by BN Technologies Corporation) under the condition of a speed of 30 m/min and a coating thickness of about 5 $\mu$m. The surface state of the image after the application of the active ray-curable liquid substance (the time from the application to the UV irradiation was 2 seconds) was visually observed by the following evaluation criteria, and the coatability (wettability) was evaluated.

(Evaluation Criteria)

AA: No pinhole in the area of 10 cm x 10 cm.
BB: 1 or 2 minute pinholes are observed in the area of 10 cm x 10 cm.
CC: 3 to 10 minute pinholes are observed in the area of 10 cm x 10 cm.
DD: 11 or more pinholes are observed in the area of 10 cm x 10 cm.

[Evaluation of adhesiveness]

(Evaluation method)

Evaluation of the adhesiveness of the images was carried out by the mending tape peeling method. The procedure is as follows (1) to (7).

(1) Images are photographed at a magnification of 100 times using a digital microscope VHX-6000 manufactured by Keyence Corporation, and binarization is performed by a LUSEX-AP manufactured by Nireko Corporation.

(2) Lightly attach the Mending Tape (manufactured by Sumitomo 3M Corporation: No. 810-3-12) to the images.
(3) The tape is rubbed back and forth 3.5 times over the tape at a pressure of 1 kPa.
(4) The tape is peeled off at an angle of 180 degrees with a force of 200 g.
(5) Images after peeling are photographed at a magnification of 100 times using a digital microscope VHX-6000 manufactured by Keyence Corporation, and binarization is performed by a LUSEX-AP manufactured by Nireko Corporation.
(6) Calculate the active ray-curable liquid substance fixing rate by the following formula.

Activated ray-curable liquid substance fixing rate [%] = (Hiding ratio to an image region made of resin by an active ray-curable liquid substance after tape peeling)/(Hiding ratio to an image region made of resin by a powder before tape peeling) x 100

(7) Adhesion was evaluated based on the following evaluation criteria.

(Evaluation Criteria)

AA: No exfoliation of active ray-curable liquid substance
BB: Exfoliation of the active ray-curable liquid substance is less than 5%
CC: Exfoliation of active radiation-curable liquid substances is in the range of 5% or more to less than 30%.
DD: Exfoliation of the active ray-curable liquid substance is 30% or more.

[Evaluation of territoriality of contact angle and viscosity]

(Evaluation method)

For the active ray-curable liquid substance at a temperature of 25 °C, a coordinate (A, V) of a point indicating a contact angle A (°) and a viscosity V (mPa·s) corresponding to the contact angle A(°) is plotted in a coordinate system having a contact angle A (°) with an image on a horizontal axis and a viscosity V (mPa·s) on a vertical axis. The contact angle A (°) and the viscosity V (mPa·s) of the active ray-curable liquid substance are judged whether they are included in the coordinate area R (A, V) above the contact angle-viscosity curve represented by a formula on a right side of the following Expression (1) or Expression (5). As a reference for judgment, FIG. 8 shows a contact angle-viscosity curve and a plot diagram of Examples and Comparative Examples.

The contact angle A (°) with an image was measured by Dmo-701 of Kyowa Interface Scientific Co., Ltd. at one second after dropping the active ray-curable liquid substance at 25 °C onto the image. Further, the viscosity of the active ray-curable liquid substance was measured by immersing the vibrator in the liquid at room temperature (25 °C) with a vibrating viscometer FVM70A-STC and measuring the value after 30 seconds.

The contact angle-viscosity curve was obtained by a quadratic function approximation by the least squares method based on the measured values obtained by the contact angle and viscosity measurement method described above.

In FIG. 8, $E_1$ to $E_{10}$ are plots of the coordinates (A, V) of the points of Examples 1 to 10, and $EC_1$ to $EC_6$ are plots of the coordinates (A, V) of the points of Comparative Examples 1 to 6.

$$\text{Expression (1):}\quad R(A, V) > 0.55 \times A^2 - 22 \times A + 250$$

(In Expression (1), the coordinate region R (A, V) represents a region composed of an aggregate of coordinates (A, V) of points in the coordinate system above the contact angle-viscosity curve represented by the formula on the right side of Expression (1)).

$$\text{Expression (5):}\quad R(A, V) > 0.72 \times A^2 - 22 \times A + 250$$

(In Expression (5), the coordinate region R (A, V) represents a region composed of an aggregate of coordinates (A, V) of points in the coordinate system above the contact angle-viscosity curve represented by the formula on the right side of Expression (5)).

The toner, the varnish used in the above Examples and Comparative Examples, and the aqueous solution used in the surface modification step, the measured contact angle and viscosity, and the evaluation results thereof are as shown in

Table IV. As is clear from the evaluation results shown in Table IV below, it can be seen that the Examples of the present invention are comprehensively superior to the Comparative Examples.

Table IV

| Example or Comparative Example | Toner No. | Varnish No. | Aqueous solution No. | Contact angle [° ] | Viscosity [mPa·s] | Evaluation | |
|---|---|---|---|---|---|---|---|
| | | | | | | Coatability | Adhesiveness |
| Example 1 | 1 | 1 | - | 27 | 130 | AA | BB |
| Example 2 | 2 | 2 | - | 35 | 300 | BB | AA |
| Example 3 | 3 | 3 | - | 39 | 550 | AA | AA |
| Example 4 | 4 | 3 | - | 45 | 550 | CC | BB |
| Example 5 | 4 | 4 | - | 47 | 800 | CC | AA |
| Example 6 | 1 | 5 | - | 30 | 125 | BB | AA |
| Example 7 | 1 | 6 | - | 39 | 250 | BB | AA |
| Example 8 | 1 | 7 | - | 48 | 520 | BB | AA |
| Example 9 | 1 | 9 | 1 | 31 | 150 | BB | AA |
| Example 10 | 1 | 10 | 2 | 39 | 300 | BB | AA |
| Comparative Example 1 | 1 | 8 | - | 31 | 70 | DD | DD |
| Comparative Example 2 | 1 | 9 | - | 37 | 150 | DD | CC |
| Comparative Example 3 | 1 | 10 | - | 45 | 300 | DD | CC |
| Comparative Example 4 | 1 | 11 | - | 51 | 490 | DD | CC |
| Comparative Example 5 | 1 | 9 | 3 | 46 | 150 | DD | DD |
| Comparative Example 6 | 1 | 10 | 4 | 44 | 300 | DD | DD |

Although embodiments of the present invention have been described and illustrated in detail, the disclosed embodiments are made for purposes of illustration and example only and not limitation. The scope of the present invention should be interpreted by terms of the appended claims.

**Description of Symbols**

1: Paper feed cassette
1A: Paper feed roller
3: Conveying path
5: Secondary transfer roller
6: Opposing roller
8: Transfer belt
9: Drive motor
10C, 10M, 10Y, and 10K: Primary transfer roller
11C, 11M, 11Y, and 11K: Photoreceptor
12C, 12M, 12Y, and 12K: Developing roller
13C, 13M, 13Y, and 13K: Print head
14C, 14M, 14Y, and 14K: Charging charger
15C, 15M, 15Y, and 15K: Toner unit
30C, 30M, 30Y, and 30K: Process unit
31: Density sensor
66: Smoothness sensor
74: Conveying roller
100: Control unit

200: Image forming section
300: Operation panel
500: Image forming apparatus
605: Fixing belt
609: Pressure roller
800: Scanner unit
900: Auto document feeder
C: Cyan
M: Magenta
Y: Yellow
K: Black
P: Paper
$\gamma_S$: Solid surface tension
$\gamma_L$: Liquid surface tension
$\theta$: Contact angle
$\gamma_{LS}$: Surface tension of solid and liquid

## Claims

**1.** An image forming method comprising the steps of:

forming an image on a recording medium with a printing material containing a release agent; and subsequently, applying an active ray-curable liquid substance by a roll coating method,
wherein the active ray-curable liquid substance contains a reactive monomer and an acrylic resin polymer; and when a contact angle A (°) with an image is taken on a horizontal axis and a viscosity V (mPa·s) is taken on a vertical axis in a coordinate system for the active ray-curable liquid substance at a temperature of 25 °C, and when a coordinate (A, V) of a point indicating the contact angle A (°) and the viscosity V (mPa·s) corresponding to the contact angle A (°) is plotted in the coordinate system, the contact angle A (°) and the viscosity V (mPa·s) of the active ray-curable liquid substance are included in a coordinate region R (A, V) on an upper side of a contact angle-viscosity curve represented by a formula on a right side of the following Expression (1),

$$\text{Expression (1):} \quad R\ (A, V) > 0.55 \times A^2 - 22 \times A + 250$$

in Expression (1), the coordinate region R (A, V) is a region composed of an aggregate of the coordinates (A, V) of points on the upper side of the contact angle-viscosity curve represented by the formula on the right side of the Expression (1) in the coordinate system;
wherein the contact angle of the active ray-curable liquid substance at 25 °C is measured at one second after dropping onto the image;
wherein the viscosity is measured by immersing a vibrating viscometer at 25 °C and measuring the values after 30 seconds.

**2.** The image forming method described in claim 1, wherein when the contact angle is A (°) and the viscosity is V (mPa·s) for the active ray-curable liquid substance at a temperature of 25 °C, A (°) and V (mPa·s) satisfy the following Expressions (2) to (4),

$$\text{Expression (2):} \quad 0 \leq A < 30 \text{ and } 85 \leq V < 1000$$

$$\text{Expression (3):} \quad 30 \leq A < 40 \text{ and } 250 \leq V < 1000$$

$$\text{Expression (4):} \quad 40 \leq A < 50 \text{ and } 525 \leq V < 1000$$

**3.** The image forming method described in claim 1 or 2, wherein the printing material is an electrostatic charge image developing toner.

**4.** The image forming method described in claim 3, wherein the electrostatic charge image developing toner contains a

hydrocarbon wax, a polyethylene wax, a coal wax or a Fischer-Tropsch wax as a release agent.

**5.** The image forming method described in claim 3 or 4, wherein the electrostatic image developing toner contains a resin, a colorant, and a release agent; and the resin is formed of a styrene-acrylic resin and an aromatic polyester resin.

**6.** The image forming method described in any one of claims 1 to 4, wherein when the viscosity of the active ray-curable liquid substance is V (mPa·s) and the contact angle between the active ray-curable liquid substance and the image is A (°), the contact angle and the viscosity of the active ray-curable liquid substance are included in a coordinate region R (A, V) on an upper side of a contact angle-viscosity curve represented by a formula on a right side of the following Expression (5),

$$\text{Expression (5):}\quad R\ (A, V) > 0.72 \text{ x } A^2 - 22 \text{ x } A + 250.$$

**7.** The image forming method described in any one of claims 1 to 6, further comprising the step of modifying a surface of the image after the step of forming an image and prior to the step of applying an active ray-curable liquid substance.

**8.** The image forming method described in claim 7, wherein the step of modifying a surface is a step of applying an aqueous solution containing a petroleum-based nonionic surfactant to the image; and
the nonionic surfactant has an HLB value in the range of 8 to 13.

**9.** The image forming method described in claim 8, wherein the nonionic surfactant has an HLB value in the range of 9 to 13.

**10.** The image forming method described in any one of claim 1 to 9, wherein the active ray-curable liquid substance is an ultraviolet-curable resin liquid.

## Patentansprüche

**1.** Ein Bildgebungsverfahren, das die folgenden Schritte umfasst:

Erzeugen eines Bildes auf einem Aufzeichnungsmedium mit einem Druckmaterial, das ein Trennmittel enthält; und anschließend
Aufbringen einer aktiven strahlungshärtbaren flüssigen Substanz durch ein Walzenbeschichtungsverfahren,
wobei die aktive strahlungshärtbare flüssige Substanz ein reaktives Monomer und ein Acrylharzpolymer enthält; und wenn ein Kontaktwinkel A (°) zu einem Bild auf einer horizontalen Achse und eine Viskosität V (mPa·s) auf einer vertikalen Achse in einem Koordinatensystem für die aktive strahlungshärtbare flüssige Substanz bei einer Temperatur von 25 °C gemessen wird und wenn eine Koordinate (A, V) eines Punktes, der den Kontaktwinkel A (°) und die Viskosität V (mPa·s) entsprechend dem Kontaktwinkel A (°) angibt, in dem Koordinatensystem aufgetragen wird, der Kontaktwinkel A (°) und die Viskosität V (mPa·s) der aktiven strahlungshärtbaren flüssigen Substanz in einem Koordinatenbereich R (A, V) auf einer Oberseite einer Kontaktwinkel-Viskositätskurve, die durch eine Formel auf der rechten Seite der folgenden Gleichung (1) dargestellt ist, dem

$$\text{Verhältnis (1):}\quad R\ (A, V) > 0{,}55 \text{ x } A^2 - 22 \text{ x } A + 250$$

entspricht, wobei
in dem Verhältnis (1) der Koordinatenbereich R (A, V) ein Bereich ist, der aus einer Ansammlung der Koordinaten (A, V) von Punkten auf der Oberseite der Kontaktwinkel-Viskositätskurve besteht, die durch die Formel auf der rechten Seite des Verhätnisses (1) im Koordinatensystem dargestellt ist,
wobei der Kontaktwinkel der aktiven strahlhärtbaren Flüssigkeit bei 25 °C eine Sekunde nach dem Auftropfen auf das Bild gemessen wird;
wobei die Viskosität durch Eintauchen eines vibrierenden Viskosimeters bei 25 °C und Messen der Werte nach 30 Sekunden gemessen wird.

**2.** Das Bildgebungsverfahren gemäß Anspruch 1, wobei, wenn der Kontaktwinkel A (°) und die Viskosität V (mPa·s) für die aktive strahlungshärtbare flüssige Substanz bei einer Temperatur von 25 °C betragen, A (°) und V (mPa·s) die

folgenden Verhältnisse (2) bis (4) erfüllen:

$$\text{Verhältnis (2):} \quad 0 \leq A < 30 \text{ und } 85 \leq V < 1000$$

$$\text{Verhältnis (3):} \quad 30 \leq A < 40 \text{ und } 250 \leq V < 1000$$

$$\text{Verhältnis (4):} \quad 40 \leq A < 50 \text{ und } 525 \leq V < 1000$$

3. Das Bildgebungsverfahren gemäß Anspruch 1 oder 2, wobei das Druckmaterial ein elektrostatisch aufladbarer Toner ist.

4. Das Bildgebungsverfahren gemäß Anspruch 3, wobei der elektrostatische Ladungsbildentwicklungstoner ein Kohlenwasserstoffwachs, ein Polyethylenwachs, ein Kohlewachs oder ein Fischer-Tropsch-Wachs als Trennmittel enthält.

5. Das Bildgebungsverfahren gemäß Anspruch 3 oder 4, wobei der elektrostatische Toner zur Entwicklung eines Bildes ein Harz, ein Farbmittel und ein Trennmittel enthält und das Harz aus einem Styrol-Acrylharz und einem aromatischen Polyesterharz gebildet ist.

6. Das Bildgebungsverfahren gemäß einem der Ansprüche 1 bis 4, wobei, wenn die Viskosität der aktiven strahlungshärtbaren flüssigen Substanz V (mPa·s) und der Kontaktwinkel zwischen der aktiven strahlungshärtbaren flüssigen Substanz und dem Bild A (°) ist, der Kontaktwinkel und die Viskosität der aktiven strahlungshärtbaren flüssigen Substanz in einem Koordinatenbereich R (A, V) auf einer Oberseite einer Kontaktwinkel-Viskositätskurve, die durch eine Formel auf der rechten Seite der folgenden Gleichung (5) dargestellt ist, dem

$$\text{Verhältnis (5):} \quad R\ (A, V) > 0{,}72 \times A^2 - 22 \times A + 250$$

entspricht.

7. Das Bildgebungsverfahren gemäß einem der Ansprüche 1 bis 6, das ferner den Schritt des Modifizierens einer Oberfläche des Bildes nach dem Schritt des Bildgebens und vor dem Schritt des Aufbringens einer aktiven strahlungshärtbaren flüssigen Substanz umfasst.

8. Das Bildgebungsverfahren gemäß Anspruch 7, wobei der Schritt des Modifizierens einer Oberfläche ein Schritt des Aufbringens einer wässrigen Lösung, die ein nichtionisches Tensid auf Erdölbasis enthält, auf das Bild umfasst; und das nichtionische Tensid einen HLB-Wert im Bereich von 8 bis 13 aufweist.

9. Das Bildgebungsverfahren gemäß Anspruch 8, wobei das nichtionische Tensid einen HLB-Wert im Bereich von 9 bis 13 aufweist.

10. Das Bildgebungsverfahren gemäß einem der Ansprüche 1 bis 9, wobei die aktive strahlungshärtbare flüssige Substanz eine ultraviolett härtbare Harzflüssigkeit ist.

**Revendications**

1. Procédé de formation d'image comprenant les étapes de :

   former une image sur un support d'enregistrement avec un matériau d'impression contenant un agent de démoulage ; et ensuite,
   appliquer une substance liquide active durcissable par rayonnement par un procédé de revêtement au rouleau, dans lequel la substance liquide active durcissable par rayonnement contient un monomère réactif et un polymère de résine acrylique ; et lorsque un angle de contact A (°) avec une image est pris sur un axe horizontal et une viscosité V (mPa·s) est prise sur un axe vertical dans un système de coordonnées pour la substance liquide active durcissable par rayonnement à une température de 25 °C, et lorsque une coordonnée (A, V) d'un point indiquant l'angle de contact A (°) et la viscosité V (mPa·s) correspondant à l'angle de contact A (°) est tracée dans

le système de coordonnées, l'angle de contact A (°) et la viscosité V (mPa·s) de la substance liquide active durcissable par rayonnement sont inclus dans une région de coordonnées R (A, V) sur un côté supérieur d'une courbe angle de contact-viscosité représentée par une formule sur un côté droit de l'Expression (1) suivante,

$$\text{Expression (1) : } R(A, V) > 0{,}55 \times A^2 - 22 \times A + 250$$

dans l'Expression (1), la région de coordonnées R (A, V) est une région composée d'un agrégat des coordonnées (A, V) de points sur le côté supérieur de la courbe angle de contact-viscosité représentée par la formule du côté droit de l'Expression (1) dans le système de coordonnées ;
dans lequel l'angle de contact de la substance liquide active durcissable par rayonnement à 25 °C est mesuré à une seconde après avoir été déposée sur l'image
dans lequel la viscosité est mesurée en immergeant un viscosimètre vibrant à 25 °C et en mesurant les valeurs après 30 secondes.

**2.** Le procédé de formation d'image décrit dans la revendication 1, dans lequel, lorsque l'angle de contact est A (°) et la viscosité est V (mPa·s) pour la substance liquide active durcissable par rayonnement à une température de 25 °C, A (°) et V (mPa·s) satisfont aux Expressions (2) à (4) suivantes,

$$\text{Expression (2) : } 0 \leq A < 30 \text{ et } 85 \leq V < 1000$$

$$\text{Expression (3) : } 30 \leq A < 40 \text{ et } 250 \leq V < 1000$$

$$\text{Expression (4) : } 40 \leq A < 50 \text{ et } 525 \leq V < 1000$$

**3.** Le procédé de formation d'image décrit dans la revendication 1 ou 2, dans lequel le matériau d'impression est un toner de développement d'image à charge électrostatique.

**4.** Le procédé de formation d'image décrit dans la revendication 3, dans lequel le toner de développement d'image à charge électrostatique contient une cire hydrocarbonée, une cire de polyéthylène, une cire de charbon ou une cire de Fischer-Tropsch comme agent de démoulage.

**5.** Le procédé de formation d'image décrit dans la revendication 3 ou 4, dans lequel le toner de développement d'image électrostatiques contient une résine, un colorant et un agent de démoulage ; et la résine est formée d'une résine styrène-acrylique et d'une résine polyester aromatique.

**6.** Le procédé de formation d'image décrit dans l'une quelconque des revendications 1 à 4, dans lequel, lorsque la viscosité de la substance liquide active durcissable par rayonnement est V (mPa·s) et l'angle de contact entre la substance liquide active durcissable par rayonnement et l'image est A (°), l'angle de contact et la viscosité de la substance liquide active durcissable par rayonnement sont compris dans une région de coordonnées R (A, V) sur un côté supérieur d'une courbe angle de contact-viscosité représentée par une formule sur un côté droit de l'Expression (5) suivante,

$$\text{Expression (5) : } R(A, V) > 0{,}72 \times A^2 - 22 \times A + 250.$$

**7.** Le procédé de formation d'image décrit dans l'une quelconque des revendications 1 à 6, comprenant en outre l'étape de modification d'une surface de l'image après l'étape de formation d'une image et avant l'étape d'application d'une substance liquide active durcissable par rayonnement.

**8.** Le procédé de formation d'image décrit dans la revendication 7, dans lequel l'étape de modification d'une surface est une étape d'application d'une solution aqueuse contenant un tensioactif non ionique à base de pétrole sur l'image ; et le tensioactif non ionique a une valeur HLB dans la plage de 8 à 13.

**9.** Le procédé de formation d'image décrit dans la revendication 8, dans lequel le tensioactif non ionique a une valeur HLB dans la plage de 9 à 13.

**10.** Le procédé de formation d'image décrit dans l'une quelconque des revendications 1 à 9, dans lequel la substance liquide active durcissable par rayonnement est un liquide résineux durcissable par ultraviolet.

FIG. 1

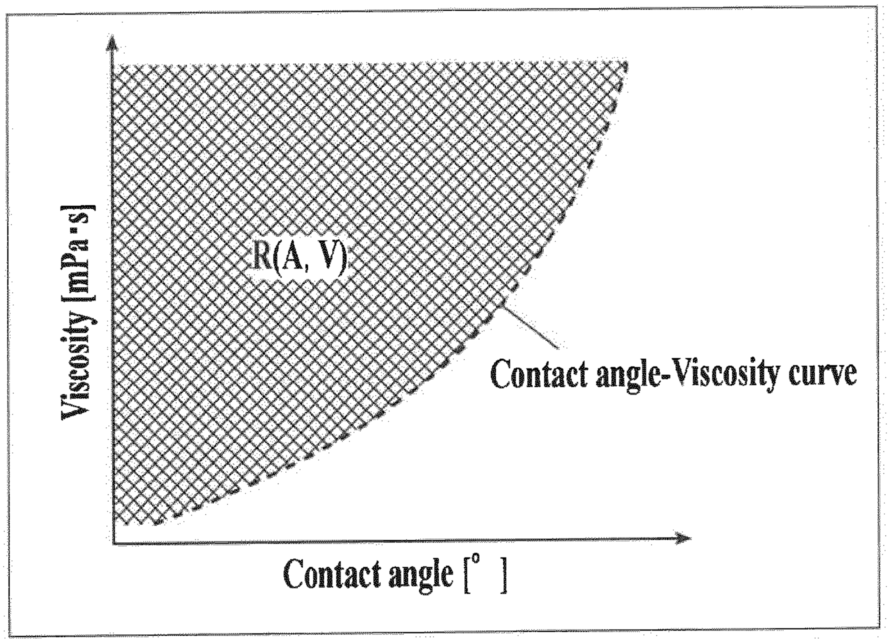
R(A, V)
Contact angle-Viscosity curve
Viscosity [mPa·s]
Contact angle [° ]

FIG. 2

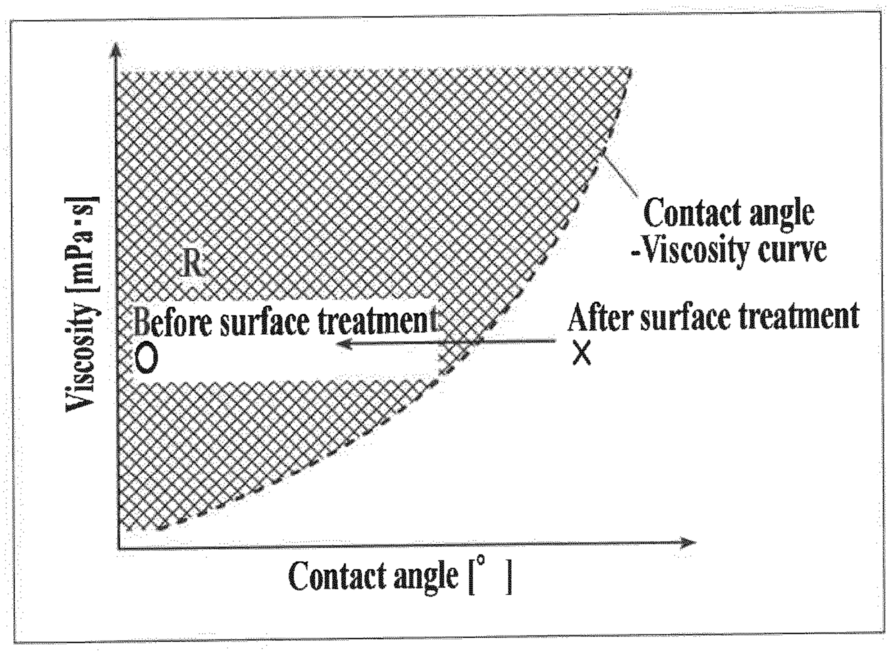
R
Contact angle
-Viscosity curve
Before surface treatment
O
After surface treatment
X
Viscosity [mPa·s]
Contact angle [° ]

FIG.3

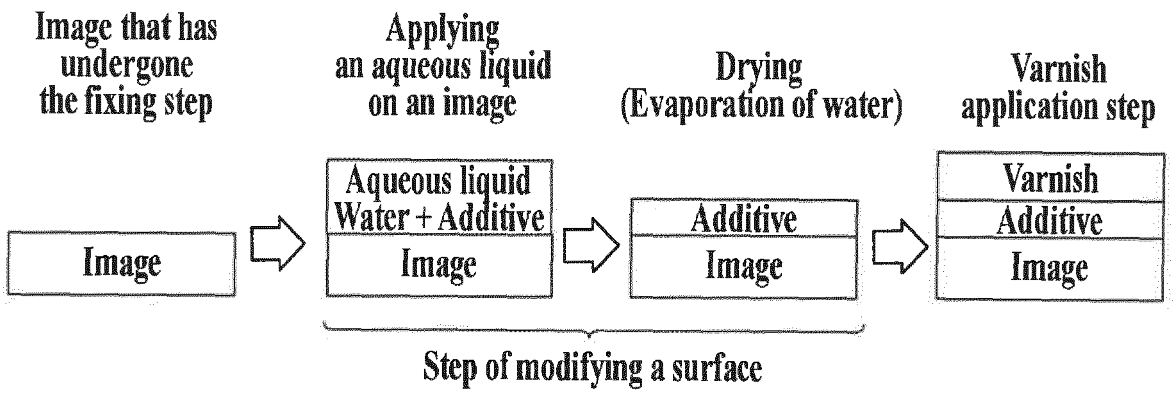
Image that has undergone the fixing step
Applying an aqueous liquid on an image
Drying (Evaporation of water)
Varnish application step
Image
Aqueous liquid
Water + Additive
Image
Additive
Image
Varnish
Additive
Image
Step of modifying a surface

FIG.4

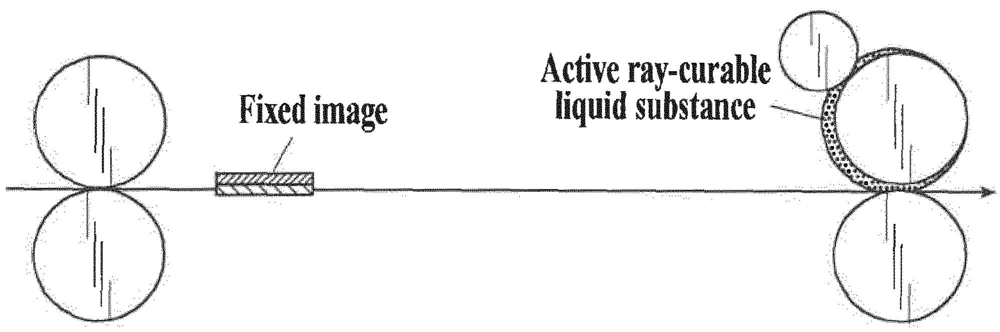
Fixed image
Active ray-curable liquid substance

FIG.5

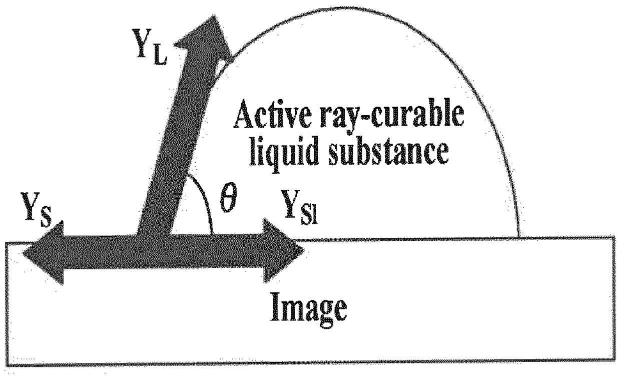
$Y_L$
Active ray-curable liquid substance
$Y_S$
$\theta$
$Y_{Sl}$
Image

FIG.6

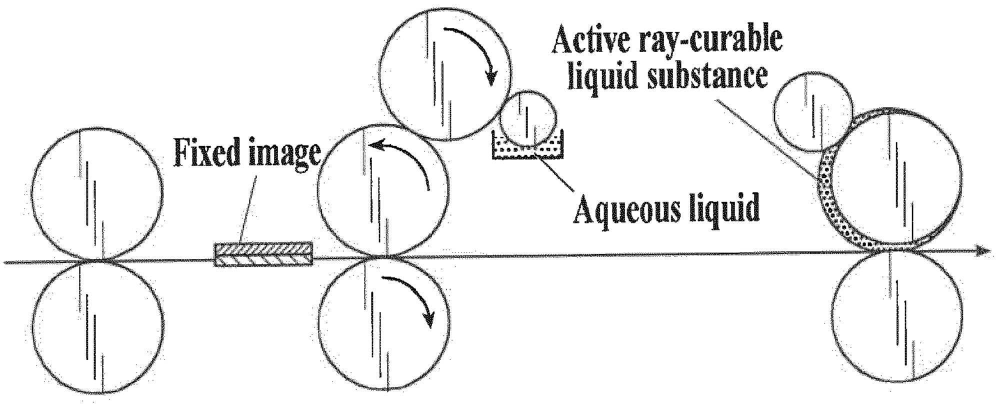
Active ray-curable liquid substance
Fixed image
Aqueous liquid

FIG. 7

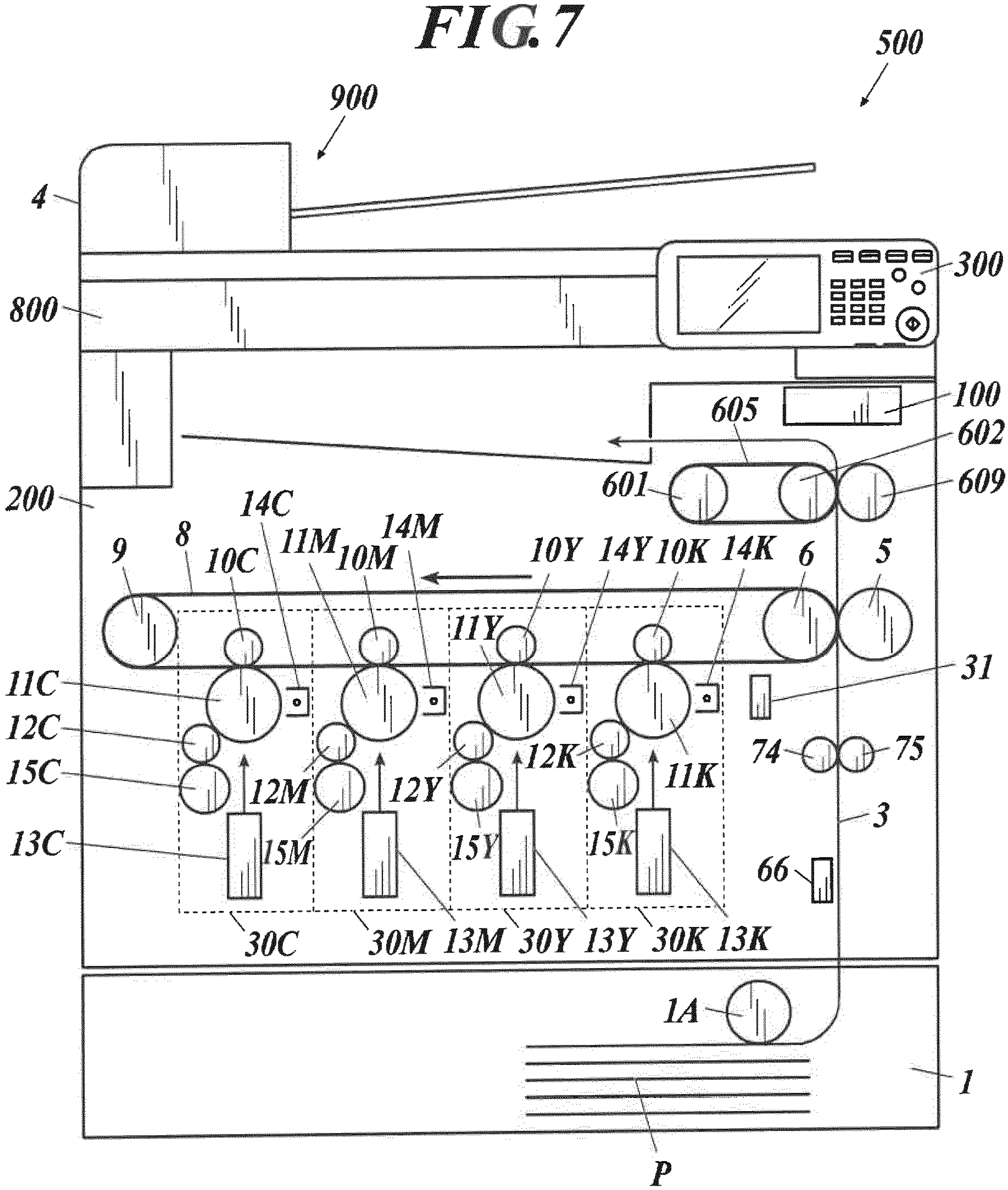
500
900
4
300
800
100
605
602
601
609
200
14C
14M
9
8
10C
11M
10M
10Y
14Y
10K
14K
6
5
11Y
31
11C
12C
12K
74
75
15C
12M
12Y
11K
3
13C
15M
15Y
15K
66
30C
30M
13M
30Y
13Y
30K
13K
1A
1
P

FIG. 8

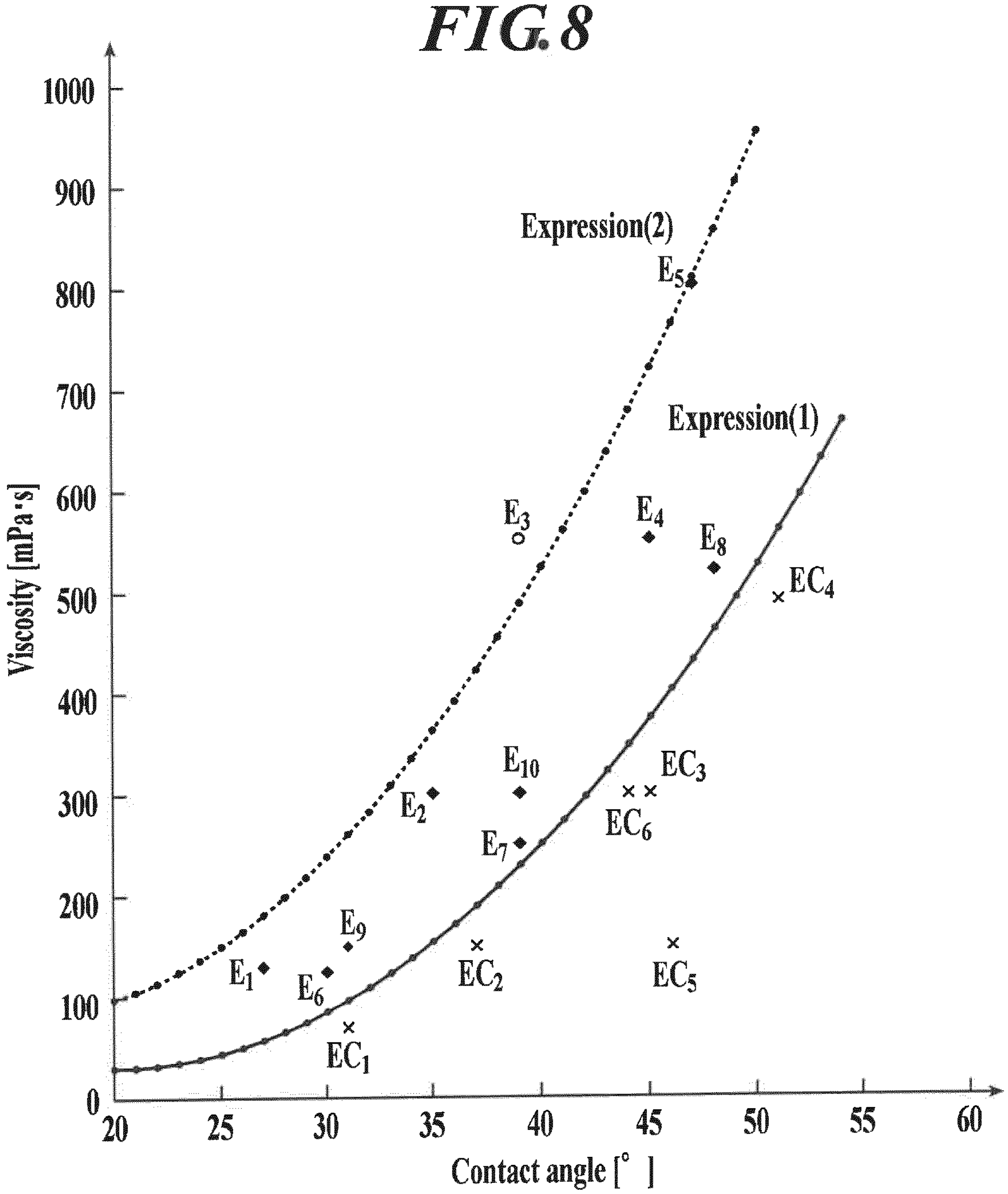
Viscosity [mPa·s]
1000
900
800
700
600
500
400
300
200
100
0
Expression(2)
Expression(1)
E5
E3
E4
E8
EC4
E10
EC3
E2
E7
EC6
E9
E1
E6
EC2
EC5
EC1
20
25
30
35
40
45
50
55
60
Contact angle [° ]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015004971 A
- JP 2013246281 A